(19) Europäisches Patentamt
European Patent Office
Office européen des brevets

(11) Veröffentlichungsnummer: **0 385 426 A1**

(12) **EUROPÄISCHE PATENTANMELDUNG**

(21) Anmeldenummer: **90103874.5**

(22) Anmeldetag: **28.02.90**

(51) Int. Cl.5: **C09B 62/04, C09B 62/503, D06P 1/38**

(30) Priorität: **03.03.89 DE 3906778**

(43) Veröffentlichungstag der Anmeldung: **05.09.90 Patentblatt 90/36**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Hähnle, Reinhard, Dr.**
**Kastanienweg 7a**
**D-6340 Königstein/Taunus(DE)**

(54) **Wasserlösliche faserreaktive Farbstoffe, Verfahren zu ihrer Herstellung und ihre Verwendung.**

(57) Farbstoffe entsprechend der allgemeinen Formel

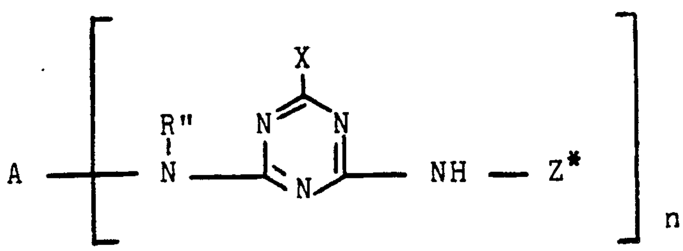

in welcher bedeuten:
A ist ein Rest eines Farbstoffes, bevorzugt eines wasserlöslichen sulfogruppenhaltigen Farbstoffes und bevorzugt aus der Azoreihe, hiervon insbesondere der Rest eines sulfogruppenhaltigen Monoazo- oder Disazofarbstoffes;
n ist die Zahl 1 oder 2, bevorzugt 1;
R″ ist ein Wasserstoffatom oder eine Alkylgruppe von 1 bis 4 C-Atomen, wie die Methylgruppe;
X ist ein Chlor- oder Fluoratom;
Z* ist eine Gruppe der allgemeinen Formel

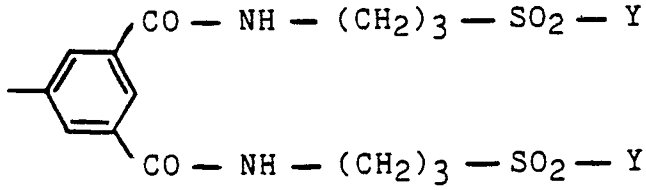

in welcher
Y die Vinylgruppe oder ß-Chlorethylgruppe oder bevorzugt die ß-Sulfatoethylgruppe ist.
Die neuen Farbstoffe färben carbonamidgruppen- und/oder hydroxygruppenhaltige Materialien, wie beispiels-

EP 0 385 426 A1

weise synthetische Polyamidfasern und Wolle und insbesondere Cellulosefasermaterialien, wie Baumwolle, in farbstarken, echten Tönen. Sie zeichnen sich durch eine hohe Faser-Farbstoff-Bindungsstabilität aus und liefern Färbungen und Drucke in hoher Farbausbeute.

**Wasserlösliche faserreaktive Farbstoffe, Verfahren zu ihrer Herstellung und ihre Verwendung**

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf an neuen Reaktivfarbstoffen, die verbesserte Eigenschaften, insbesondere in Bezug auf die Echtheiten, aufweisen. So sind zwar bspw. aus der britischen Patentschrift Nr. 1 576 237 den Europäischen Patentanmeldungs-Veröffentlichungen Nr. 0 070 806A, 0 070 808A und 0 221 013A sowie den deutschen Offenlegungsschriften Nrs. 33 27 641, 35 26 551 und 36 28 090 faserreaktive Farbstoffe bekannt, gleichwohl lag der vorliegenden Erfindung die Aufgabe zugrunde, neue, verbesserte Reaktivfarbstoffe zu finden, die Baumwolle in allen Farbtönen färben. Die neuen Farbstoffe sollten sich vor allem durch eine hohe Faser-Farbstoff-Bindungsstabilität auszeichnen und sollten besonders für das Färben nach dem Klotzverfahren geeignet sein; desweiteren sollten sich die nicht auf der Faser fixierten Anteile leicht auswaschen lassen. Desweiteren mußten die mit den neuen Farbstoffen erhältlichen Färbungen gute Allgemeinechtheiten, beispielsweise gute Licht- und Naßechtheiten, besitzen.

Mit der vorliegenden Erfindung wurde diese Aufgabe durch Auffindung der Verbindungen der allgemeinen Formel (1) gelöst.

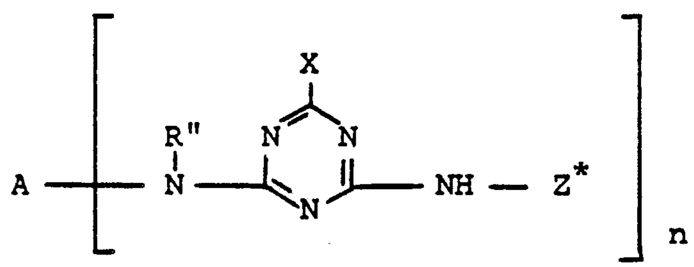

(1)

In dieser Formel bedeuten:

A ist der Rest eines sulfogruppenhaltigen Farbstoffes, insbesondere Azofarbstoffes oder Metallkomplex-Azofarbstoffes, wie eines sulfogruppenhaltigen Mono-oder Disazofarbstoffes oder eines sulfogruppenhaltigen 1:1-Kupferkomplex-Monoazo- oder -Disazofarbstoffes;

n ist die Zahl 1 oder 2, bevorzugt 1;

R″ ist ein Wasserstoffatom oder eine Alkylgruppe von 1 bis 4 C-Atomen, wie die Methylgruppe;

X ist ein Chlor- oder Fluoratom;

Z* ist eine Gruppe der allgemeinen Formel (2)

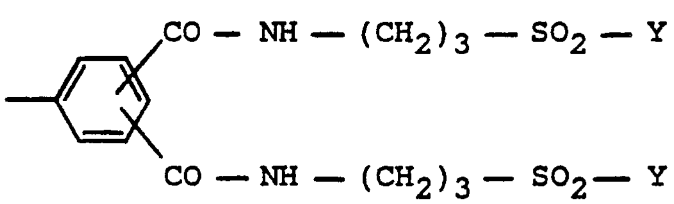

(2)

in welcher

Y die Vinylgruppe oder die ß-Chlorethyl-, ß-Phosphatoethyl- oder ß-Acetyloxyethyl-Gruppe oder bevorzugt die ß-Sulfatoethylgruppe ist.

Bevorzugt sind Farbstoffe der allgemeinen Formel (1), die insgesamt 1 bis 6 Sulfogruppen besitzen. Die Farbstoffreste A können ferner weitere übliche faserreaktive Gruppen enthalten.

Farbstoffe mit dem Rest A bzw. die den Verbindungen der allgemeinen Formel (1) zugrunde liegenden Farbstoffe mit einer Aminogruppe -NHR″ sind in der Literatur zahlreich beschrieben, so beispielsweise in den anfangs genannten Offenlegungsschriften und Patentschriften, in der europäischen Patentanmeldungs-Veröffentlichung Nr. 0 076 782A und desweiteren in Venkataraman, The Chemistry of Synthetic Dyes, New York, London, 1972, Band VI, Seiten 213-297.

Alkylgruppen R″ sind beispielsweise die n-Butyl-, n-Propyl- und die Ethylgruppe, vorzugsweise die Methylgruppe. Bevorzugt ist R″ ein Wasserstoffatom.

Wichtige Azofarbstoffe entsprechend der allgemeinen Formel (1) sind solche, in denen A einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalinazo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Die vorliegende Erfindung betrifft somit insbesondere wasserlösliche, sulfogruppenhaltige Azofarbstoffe, die die faserreaktive Gruppe Z der allgemeinen Formel (3)

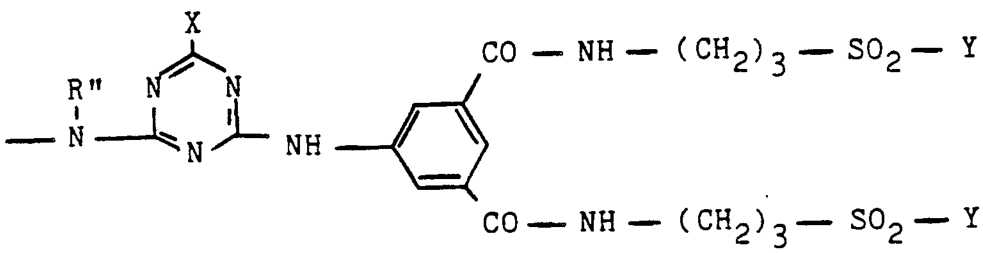

(3)

in welcher R″, X und Y die obengenannten Bedeutungen haben, einmal oder zweimal enthalten.

Solche Azofarbstoffe der allgemeinen Formel (1) sind beispielsweise Farbstoffe der allgemeinen Formeln (4a), (4b) und (4c)

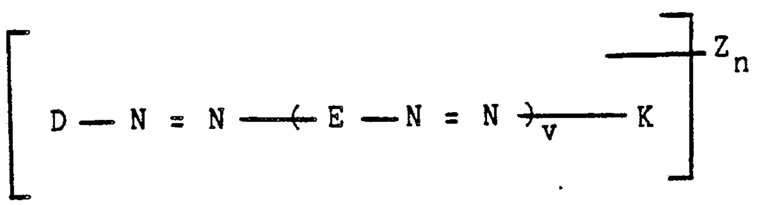

(4a)

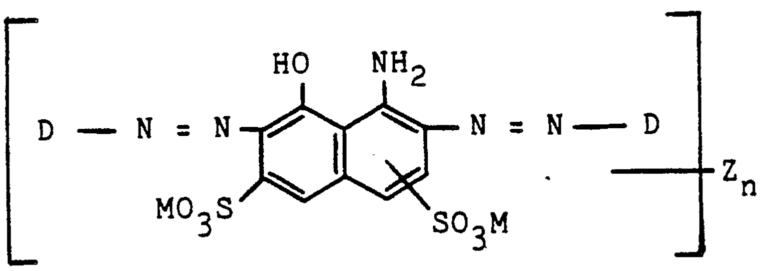

(4b)

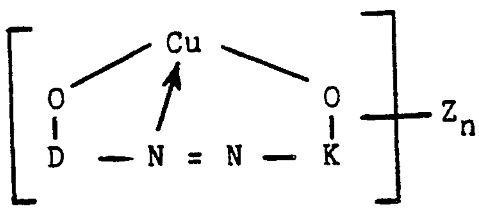

(4c)

in welchen

M für ein Wasserstoffatom oder ein Alkalimetall, wie Natrium, Kalium oder Lithium, steht,

D jeweils für den Rest einer Diazokomponente steht, die zueinander gleiche oder voneinander verschiedene Bedeutungen besitzen können,

E den bivalenten Rest einer kupplungsfähigen und diazotierbaren Verbindung bedeutet,

K der Rest einer Kupplungskomponente ist,

v für die Zahl Null oder 1 steht,

Z ein Rest der allgemeinen Formel (3) ist,

n die Zahl 1 oder 2, bevorzugt 1, ist und
der Rest Z an den Rest D oder den Rest K oder im Falle von n = 2 jeweils an D und K bzw. an beide D gebunden ist.

Aromatische Reste D der Diazokomponenten $D-NH_2$ , die keine faserreaktive Gruppe der allgemeinen Formel (3) tragen, sind beispielsweise solche der Amine der allgemeinen Formeln (5a) und (5b)

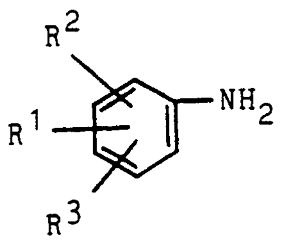
(5a)

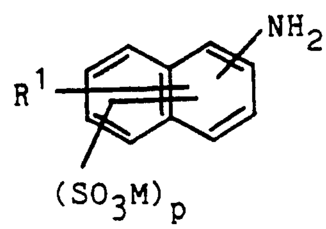
(5b)

in welchen
$R^1$ ein Wasserstoffatom, eine Sulfogruppe oder eine Gruppe der allgemeinen Formel $-SO_2-Y$ mit Y der obengenannten Bedeutung ist,
$R^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat,
wobei der Benzol- oder Naphthalinkern außerdem in ortho-Stellung zur $NH_2$-Gruppe eine Hydroxygruppe enthalten kann.

Bevorzugt ist hiervon $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Die Substituenten "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ und Sulfatogruppen entsprechend Gruppen der allgemeinen Formel $-OSO_3M$ , jeweils mit M der obengenannten Bedeutung.

Aromatische Amine der allgemeinen Formel $D-NH_2$ entsprechend den Formeln (5a) und (5b) sind beispielsweise:
2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(β-Sulfatoethylsulfonyl)-anilin, 3-(β-Sulfatoethylsulfonyl)-anilin, 2-Sulfo-5-(β-sulfatoethylsulfonyl)-anilin, 2-Sulfo-4-(β-sulfatoethylsulfonyl)-anilin, 2-Methoxy-4-(β-sulfatoethylsulfonyl)-anilin, 2-Methoxy-5-methyl-4-(β-sulfatoethylsulfonyl)-anilin, 2,5-Dimethoxy-4-(β-sulfatoethylsulfonyl)-anilin, 2-Amino-5-(β-sulfatoethylsulfonyl)-phenol, 2-Amino-4-(β-sulfatoethylsulfonyl)-phenol, 2-Amino-6-(β-sulfatoethylsulfonyl)-naphthalin-8-sulfonsäure, 2-Amino-8-(β-sulfatoethylsulfonyl)-naphthalin- 6-sulfonsäu-

re, 2-Amino-5-(ß-sulfatoethylsulfonyl)-naphthalin-7-sulfonsäure und 2-Amino-7-(ß-sulfatoethylsulfonyl)-naphthalin-5-sulfonsäure.

Aromatische Amine der Diazokomponente Z-D-$NH_2$ mit dem faserreaktiven Rest Z gehen beispielsweise von aromatischen Aminen der allgemeinen Formeln (6a) und (6b)

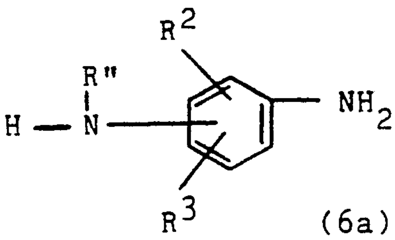
(6a)

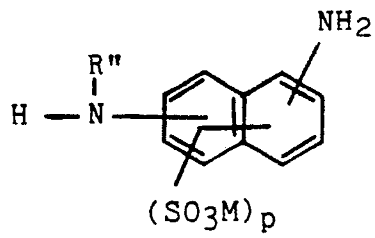
(6b)

aus, in welchen M, p, R″, $R^2$ und $R^3$ die oben angegebenen, insbesondere bevorzugten Bedeutungen haben, wobei der Benzolkern in Formel (6a) und (6b) zusätzlich in ortho-Stellung zur Aminogruppe -$NH_2$ eine Hydroxygruppe enthalten kann.

Amine der allgemeinen Formeln (6) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure, 1,3-Diamino-5-methyl-benzol, 2,6-Diamino-naphthalin, 2,6-Diaminonaphthalin-4,8-disulfonsäure, 2-Amino-5-methylamino-naphthalin-1-sulfonsäure, 2-Amino-5-methylamino-naphthalin-1,7-disulfonsäure und 1,4-Diamino-naphthalin-6-sulfonsäure.

Bevorzugte Reste D sind in den Formeln (4a) und (4b) solche der allgemeinen Formeln (5c) und (5d) bzw. (6c) und (6d)

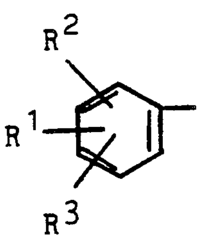
(5c)

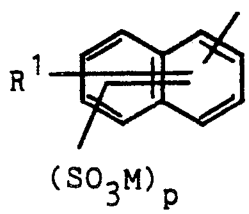
(5d)

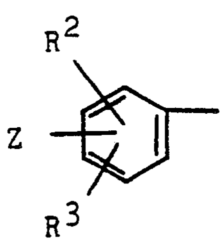
(6c)

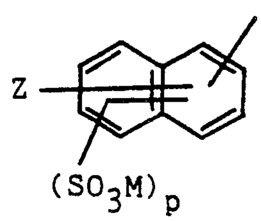
(6d)

in welchen $R^1$, $R^2$, $R^3$, Z, M und p die obengenanten Bedeutungen haben, und bevorzugte Reste D in Formel (4c) sind solche der allgemeinen Formeln (5e) und (5f) bzw. (6e) und (6f)

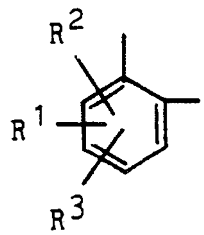

(5e)

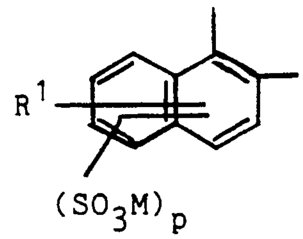

(5f)

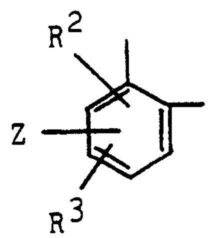

(6e)

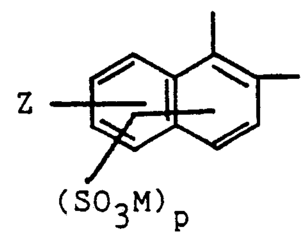

(6f)

in welchen $R^1$, $R^2$, $R^3$, Z, M und p die obengenannten Bedeutungen haben.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

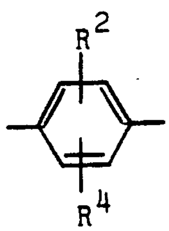

(7a)

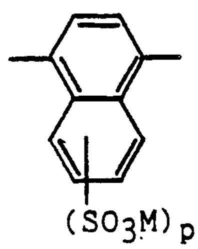

(7b)

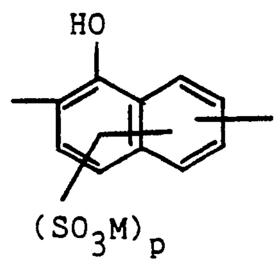

(7c)

ab, in welchen

$R^2$, M und p die oben angegebenen Bedeutungen haben und

$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist.

Verbindungen der Formel H-E-$NH_2$ sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono-und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (3) tragen, sind beispielsweise Verbindungen der allgemeinen Formeln (8a) bis (8g)

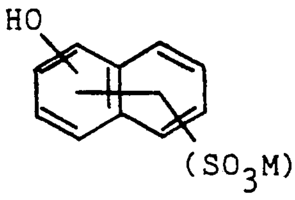
(8a)

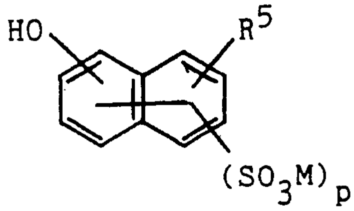
(8b)

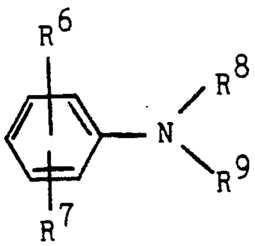
(8c)

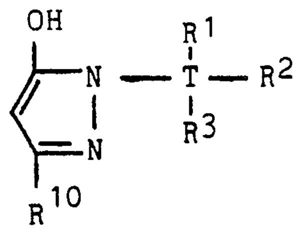
(8d)

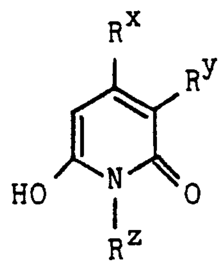
(8e)

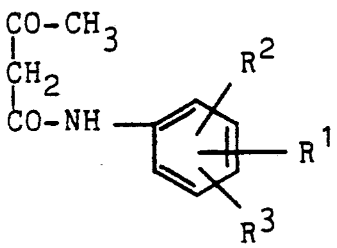
(8f)

oder

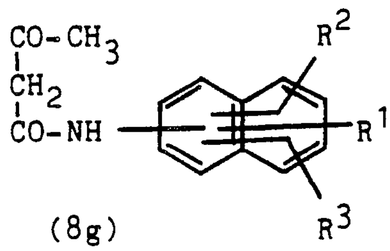
(8g)

in welchen
$R^1$, $R^2$, $R^3$, p und M die obengenannten Bedeutungen haben,
m für die Zahl Null, 1, 2 oder 3 steht (wobei diese Gruppe im Falle m gleich Null ein Wasserstoffatom bedeutet),
$R^5$ Alkylureido mit Alkylgruppen von 1 bis 6 C-Atomen, Phenylureido, im Phenylrest durch Chlor, Methyl, Methoxy, Nitro, Sulfo und/oder Carboxy und/oder eine Gruppe $-SO_2-Y$ mit Y der obigen Bedeutung substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder eine Gruppe $-SO_2-Y$ mit Y der obigen Bedeutung substituiertes Benzoylamino bedeutet,
$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, $R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,
$R^9$ Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
$R^{10}$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl und bevorzugt Carbomethoxy oder Carbethoxy und insbesondere Methyl oder Carboxy ist,

T für einen Benzol- oder Naphthalinring steht, bevorzugt ein Benzolring ist,
$R^x$ Wasserstoff oder Alkyl von 1 bis 4 C-Atomen, wie Methyl, oder ein durch Alkoxy von 1 bis 4 C-Atomen, wie Methoxy, oder Cyano substituiertes Alkyl von 1 bis 4 C-Atomen oder Phenyl ist, bevorzugt Methyl ist,
$R^y$ Wasserstoff, Sulfo oder eine Sulfoalkyl mit einem Alkylrest von 1 bis 4 C-Atomen, wie Sulfomethyl, oder Cyano oder Carbamoyl ist und
$R^z$ Wasserstoff, Alkyl von 1 bis 6 C-Atomen, bevorzugt von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano und/oder Chlor substituiertes Phenyl ist und bevorzugt Wasserstoff oder Alkyl von 1 bis 4 C-Atomen, das durch Phenyl, Sulfo oder Sulfophenyl substituiert sein kann, ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure oder 2-(3′- und 4′-Sulfophenyl)-amino-8-hydroxynaphthalin-6-sulfonsäure, 3-(3′- und 4′-Sulfophenyl)-amino-8-hydroxy-naphthalin-6-sulfonsäure, N,N-Di-(ß-sulfoethyl)-anilin und dessen im Benzolkern durch Methyl, Methoxy und/oder Ethoxy mono- oder disubstituierten Derivate, N-Ethyl-N-(ß-sulfoethyl)-anilin, N-(ß-Sulfoethyl)-anilin, N-(ß-Carboxyethyl)-anilin und deren im Benzolkern durch Methyl, Methoxy und/oder Ethoxy mono- oder disubstituierten Derivate, des weiteren 1-[3′-(β-Chlorethylsulfonyl)-benzoylamino]-3,6-disulfo-8-naphthol, 1-[3′-(Vinylsulfonyl)-benzoylamino]-3,6-disulfo-8-naphthol, 1-[3′-(Vinylsulfonyl)-benzoylamino]-4,6-disulfo-8-naphthol, 1-[3′-(ß-Sulfatoethylsulfonyl)-benzoylamino]-4,6-disulfo-8-naphthol, 2-[3′-(ß-Chlorethylsulfonyl)-benzoylamino]-6-sulfo-8-naphthol, 2-[3′-(Vinylsulfonyl)-benzoylamino]-6-sulfo-8-naphthol, 3-[3′-(ß-Chlorethylsulfonyl)-benzoylamino]-6-sulfo-8-naphthol, 3-[3′-(Vinylsulfonyl)-benzoylamino]-6-sulfo-8-naphthol, 2-[N-Methyl-N-(ß-sulfatoethylsulfonyl)-amino]-6-sulfo-8-naphthol, 3-[N-Methyl-N-(ß-sulfatoethylsulfonyl)-amino]-6-sulfo-8-naphthol, 2-[N-Ethyl-N-(ß-sulfatoethylsulfonyl)-amino]-6-sulfo-8-naphthol, 1-[N′-(3-′ß-Chlorethylsulfonyl-phenyl)-ureido]-3,6-disulfo-8-naphthol, 1-[N′-(3′-Vinylsulfonyl-phenyl)-ureido]-3,6-disulfo-8-naphthol, 1-[N′-(3′-Vinylsulfonyl-propyl)-ureido]-3,6-disulfo-8-naphthol, 1-[N′-(3′-ß-Chlorethylsulfonyl-phenyl)-ureido]-4,6-disulfo-8-naphthol, 1-[N′-(3′-Vinylsulfonyl-phenyl)-ureido]-4,6-disulfo-8-naphthol, 1-[N′-(3′-ß-Chlorethylsulfonyl-propyl)-ureido]-4,6-disulfo-8-naphthol, 2-[N′-(3′-ß-Sulfatoethylsulfonyl-phenyl)-ureido]-6-sulfo-8-naphthol, 2-[N′-(3′-ß-Chlorethylsulfonyl-propyl)-ureido]-6-sulfo-8-naphthol, 3-[N′-(3′-ß-Chlorethylsulfonyl-phenyl)ureido]-6-sulfo-8-naphthol und 3-[N′-(3′-Vinylsulfonyl-propyl)-ureido]-6-sulfo-8-naphthol.

Von besonderer Bedeutung hiervon sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Pyrazolon-Kupplungskomponenten sind beispielsweise 3-Methyl-, 3-Carboxy- und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl oder Sulfamoyl substituiertes Phenyl oder sulfosubstituiertes 1- oder 2-Naphthyl tragen, beispielsweise:
1-(2′-Methoxy-5′-methylphenyl)-, 1-(2′-Chlor-5′-sulfophenyl)-, 1-(2′-Methoxy-5′-sulfophenyl)-, 1-(2′-Methyl-4′-sulfophenyl)-, 1-(2′,5′-Dichlor-4′-sulfophenyl)-, 1-(2′,5′-Disulfophenyl)-, 1-(2′-Carboxyphenyl)-, 1-(3′-Sulfophenyl)-, 1-(4′-Sulfophenyl)-, 1-(3′-Sulfamoylphenyl)-3-carboxy-5-pyrazolon, 1-(3′- oder 4′-Sulfophenyl)-, 1-(2′-Chlor-4′- oder -5′-sulfophenyl)-, 1-(2′-Methyl-4′-sulfophenyl)-, 1-(4′,8′-Disulfo-8-naphthyl)-, 1-(6′-Sulfo-1-naphthyl)-3- methyl-5-pyrazolon, 1-Phenyl-5-pyrazolon-3-carbonsäureethylester, 5-Pyrazolon-3-carbonsäureethylester, 5-Pyrazolon-3-carbonsäure, 1-[4′-(ß-Sulfatoethylsulfonyl)-2′-sulfo]-phenyl-3-methyl-pyrazol-5-on, 1-[4′-(ß-Sulfatoethylsulfonyl)]-phenyl-3-carboxy-pyrazol-5-on und 1-(4′-Sulfophenyl)-3-carboxy-pyrazol-5-on.

Pyridonkupplungskomponenten sind beispielsweise 1-Ethyl-2-hydroxy-4-methyl-5-carbonamido-pyridon-6, 1-(2′-Hydroxyethyl)-2-hydroxy-4-methyl-5-carbonamido-pyridon-6, (4′-Sulfo-1-phenyl)-2-hydroxy-4-methyl-5-carbonamido-pyridon-6, 1-(2′-Sulfoethyl)-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonyl-pyridon-6 und 1-(2'-Sulfo-ethyl)-2-hydroxy-4-carboxy-pyridon-6 und Acetoacetyl-arylamid-Kupplungskomponenten sind beispielsweise Acetoacetyl-(2-methoxy-4-sulfo-5-methyl)-anilin, Acetoacetyl-(2,4-dimethoxy-5-methyl)-anilin und Acetoacetyl-(4-β-sulfatoethylsulfonyl)-anilin.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der allgemeinen Formel (9a)

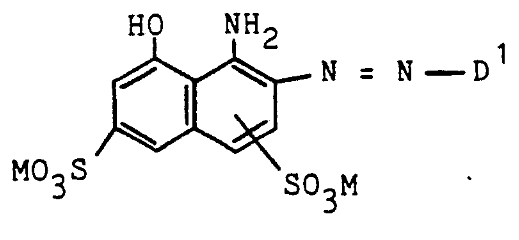

(9a)

in welcher

$D^1$ der Rest einer Diazokomponente, beispielsweise ein Rest der allgemeinen Formel (10a) oder (10b)

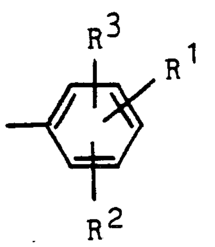

(10a)

oder

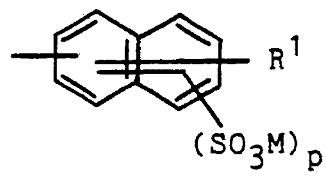

(10b)

sein kann, worin $R^1$, $R^2$, $R^3$, M und p die oben angegebenen Bedeutungen haben.

Einzelne Reste $D^1$ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(β-Sulfatoethylsulfonyl)-phenyl und 3-(β-Sulfatoethylsulfonyl)-phenyl.

Kupplungskomponenten, die erfindungsgemäß die faserreaktive Gruppe der Formel (3) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11h) bzw. deren $Z^1$-freien Vorprodukte:

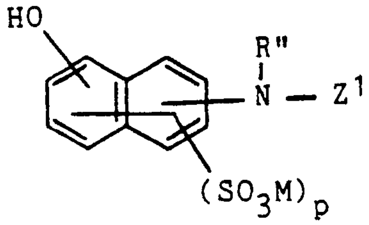

(11a)

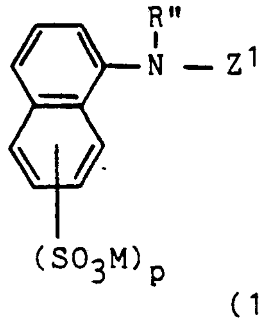

(11b)

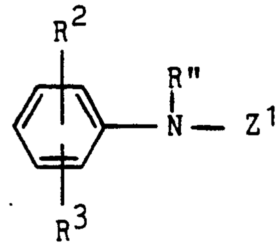

(11c)

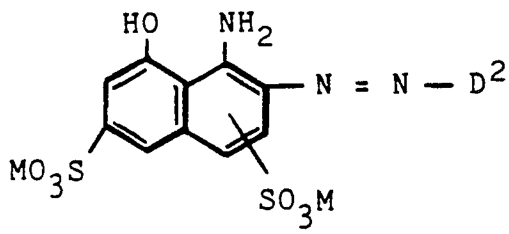

(11d)

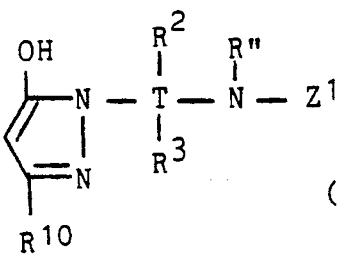

(11e)

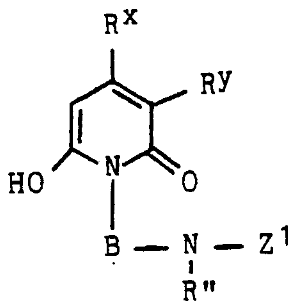

(11f)

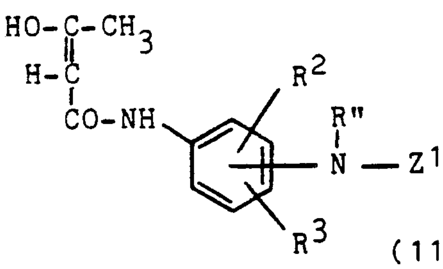

(11g)

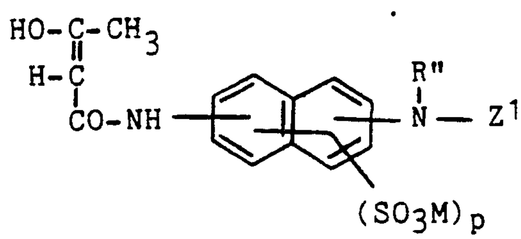

(11h)

in welchen

R″, $R^2$, $R^3$, $R^{10}$, T, M, p, $R^x$, $R^y$ und $D^2$ die obengenannten, insbesondere bevorzugten Bedeutungen haben,

B Alkyl von 1 bis 4 C-Atomen, Benzyl oder Phenethyl oder Phenyl oder im Benzolrest durch Fluor, Chlor, Brom, Methyl, Methoxy, Ethyl, Ethoxy, Cyano, Sulfo, Carboxy, Acetyl, Nitro, Carbamoyl und/oder Sulfamoyl substituiertes Benzyl, Phenylethyl oder Phenyl ist, wobei im Fall von "Benzyl" und "Phenethyl" die Gruppe -N(R″)-$Z^1$ an den Benzolkern gebunden ist,

$Z^1$ ein Rest der allgemeinen Formel (3a)

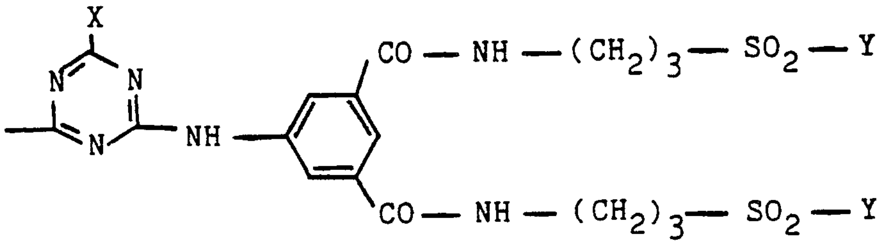

(3a)

mit X und Y der obengenannten Bedeutung ist und
$D^2$ der Rest einer Diazokomponente mit der faserreaktiven Gruppe der allgemeinen Formel (3) ist und bevorzugt einen Rest der allgemeinen Formel (12)

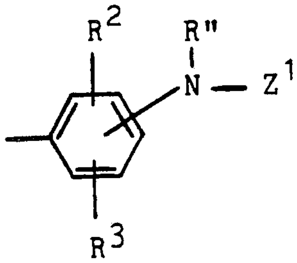

(12)

mit $R''$, $R^2$, $R^3$ und $Z^1$ der oben angegebenen Bedeutung darstellt.

Reste K in den allgemeinen Formeln (4a) und (4b) sind bevorzugt die monovalenten Reste der Verbindungen der obengenannten allgemeinen Formeln (11a) bis (11h), wobei die zur Azogruppen führende freien Bindung in Formel (11a) in ortho-Stellung zur Hydroxygruppe steht, die bevorzugt in alpha-Stellung an den Naphthalinrest gebunden ist und in Formel (11b) sich in para-Stellung zur Gruppe $-N(R'')-Z^1$ und in Formel (11c) in ortho-Stellung oder bevorzugt in para-Stellung zur Gruppe $-N(R'')-Z^1$ befindet. Bevorzugt sind hiervon die Reste der allgemeinen Formeln (11i), (11j), (11k), (11m) und (11n)

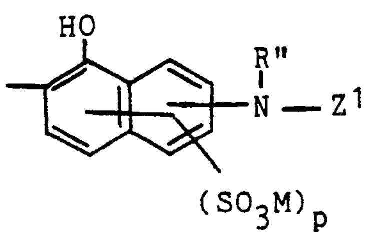

(11i)

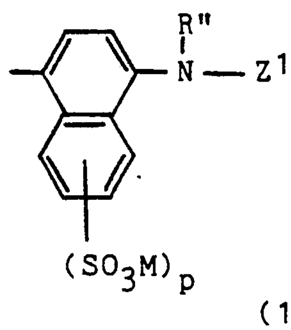

(11j)

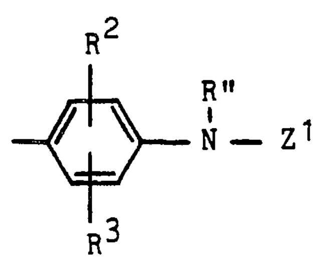

(11k)

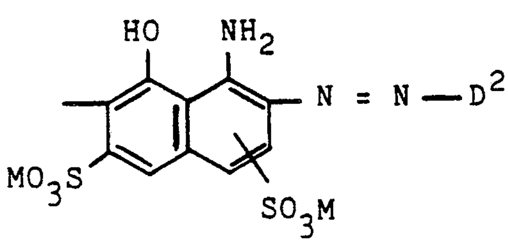

(11m)

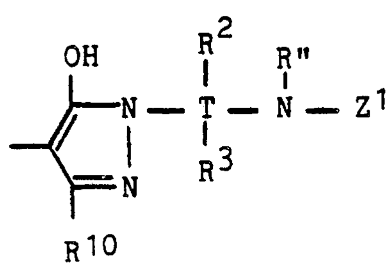

(11n)

in welchen die einzelnen Formelglieder die obengenannten, insbesondere bevorzugten Bedeutungen haben.

Die obengenannten Kupplungskomponenten der allgemeinen Formeln (11a) und (11d) bis (11h) können aus ihren $Z^1$-freien Ausgangsverbindungen, d. h. denjenigen Amino-Ausgangsverbindungen, die anstelle der Gruppe $-N(R'')-Z^1$ die Gruppe $-N(R'')-H$ besitzen, durch Umsetzung mit einer Verbindung der allgemeinen Formel $X-Z^1$ mit X und $Z^1$ der obengenannten Bedeutung hergestellt werden. Hingegen sind die Verbindungen der allgemeinen Formel (11b) und (11c) als Kupplungskomponenten selbst nicht dienlich. Sie müssen in Form ihrer $Z^1$-freien Aminoverbindungen als Kupplungskomponenten eingesetzt werden; nach der Kupplungsreaktion kann in der so gebildeten Azoverbindung der faserreaktive Rest $Z^1$ durch Umsetzung mit einer Verbindung der allgemeinen Formel $X-Z^1$ eingeführt werden. Diese Methode kann auch bei den $Z^1$-freien Amino-Ausgangsverbindungen der Verbindungen (11a) und (11d) bis (11h) gewählt werden.

Sofern die erfindungsgemäßen Azoverbindungen in der Diazokomponente D den faserreaktiven Rest der allgemeinen Formel (3) enthalten, kann der Rest K auch als faserreaktive Gruppe einen anderen, bekannten faserreaktiven Rest besitzen. Dieser kann in die aminogruppenhaltigen Ausgangs-Kupplungskomponenten entweder nach der Kupplungsreaktion oder vor der Kupplungsreaktion durch Umsetzung mit dem entsprechenden, bekannten faserreaktiven Acylierungsmittel nach bekannten Methoden eingeführt werden.

Reste K in der allgemeinen Formel (4c), an die ein metallkomplex-bindendes Sauerstoffatom gebunden ist und die gegebenenfalls die Gruppe Z enthalten, sind insbesondere solche der Formeln (13a) bis (13f)

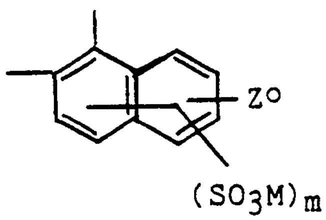

(13a)

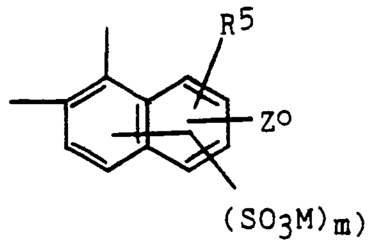

(13b)

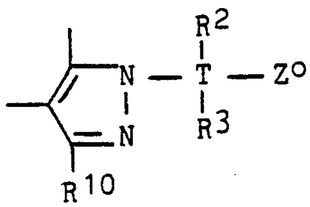

(13c)

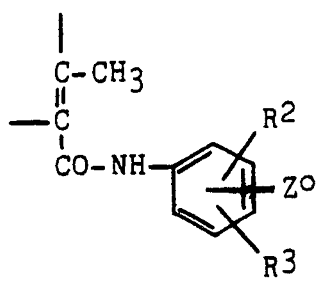

(13d)

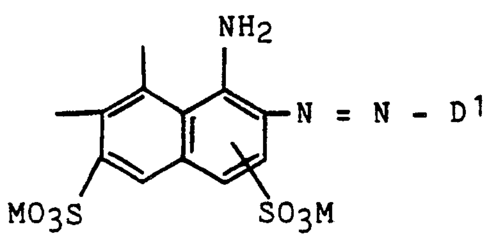

(13e)

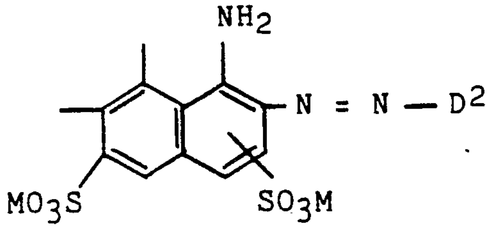

(13f)

in welchen $Z^0$ eine der Bedeutungen von $R^1$ oder Z besitzt und die anderen Formelglieder eine der obengenannten Bedeutungen haben.

Aromatische Diamine aus dem Rest der Formel (12) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (12) sind beispielsweise die Reste der Formeln (12a), (12b) und (12c)

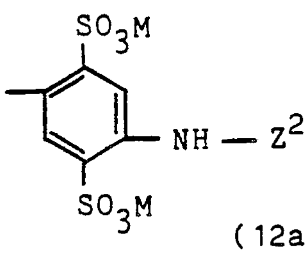

(12a)

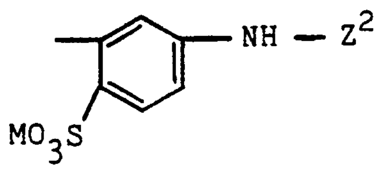

(12b)

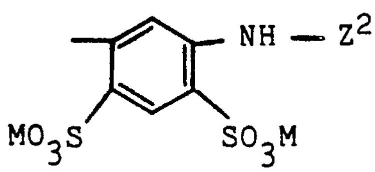

(12c)

in welchen $Z^2$ ein Rest der Formel (3b)

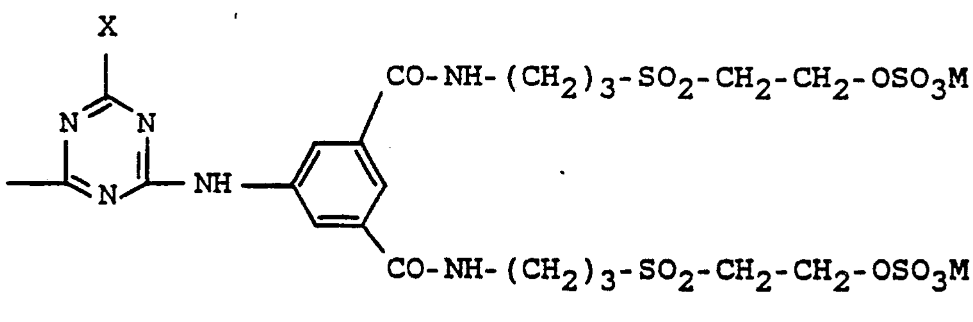

(3b)

mit X und M der obigen Bedeutungen ist, wobei X bevorzugt ein Fluoratom ist.

Faserreaktive Diazokomponentenreste $D^2$ sind auch solche, die eine andere faserreaktive Gruppe als die Gruppe Z enthalten. Solche Reste $D^2$ sind beispielsweise 4-(2-m-Sulfophenylamino-4-fluor- oder -chlor-s-triazin-6-yl)-amino-2-sulfo-phenyl, 4-(ß-Sulfatoethylsulfonyl)-phenyl, 3-(ß-Sulfatoethylsulfonyl)-phenyl und 4-Vinylsulfonyl-phenyl.

Kupplungskomponenten, die den Verbindungen der allgemeinen Formeln (11a) bis (11h) entsprechen und die anstelle des Restes $Z^1$ ein Wasserstoffatom besitzen, in deren freie Aminogruppe, erforderlichenfalls erst nach beendeter Kupplung, der Rest $Z^1$ eingeführt werden kann, sind beispielsweise: 1-(3′- oder 4′-Aminophenyl)-, 1-(2′-Sulfo-5′-aminophenyl)-und 1-(2′-Methoxy-5′-aminophenyl)-3-carboxy-5-pyrazolon, 1-(3′- oder 4′-Aminophenyl)-3-methyl-5-pyrazolon, 1-(6′-Amino-4′,8′-disulfonaphthyl-2′)-3-carboxy-5-pyrazolon.

Bevorzugte faserreaktive Kupplungskomponenten entsprechend den Formeln (13a) und (13b) sind beispielsweise Verbindungen der Formeln (14a) bis (14f):

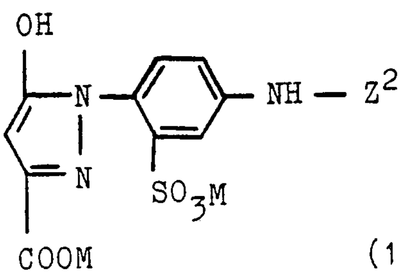
(14a)

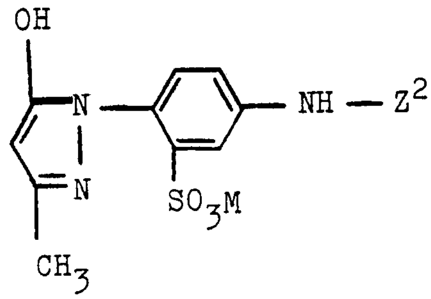
(14b)

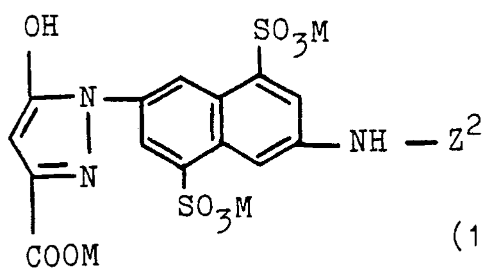
(14c)

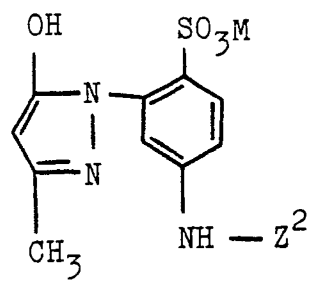
(14d)

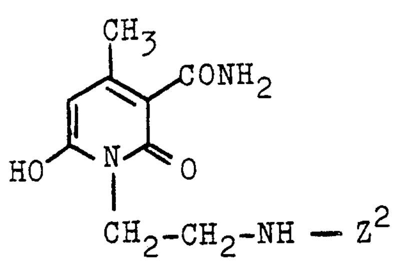
(14e)

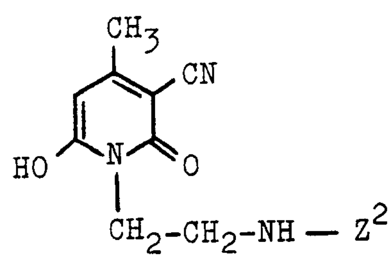
(14f)

in welchen M und $Z^2$ die obengenannten Bedeutungen haben.

Von den erfindungsgemäßen Azofarbstoffen der allgemeinen Formel (1) können insbesondere die Mono- und Disazoverbindungen der allgemeinen Formeln (15), (16a), (16b), (16c), (16d), (16e), (16f) und (17) hervorgehoben werden:

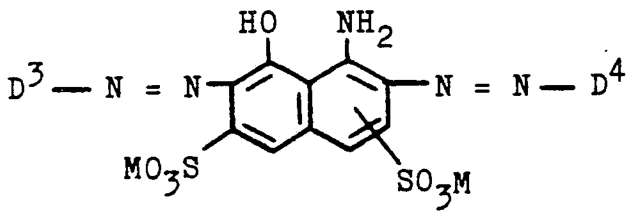

(15)

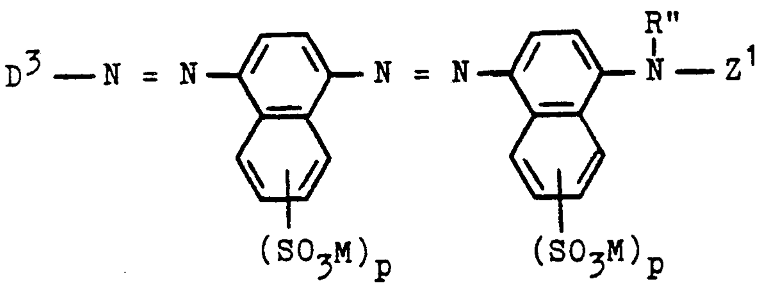

(16a)

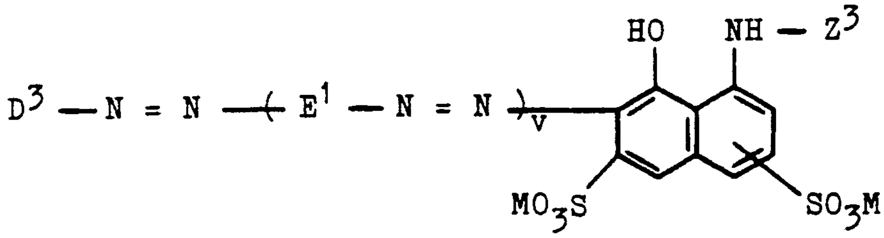

(16b)

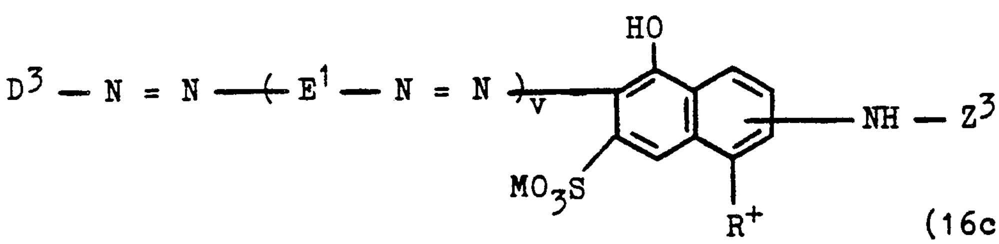

(16c)

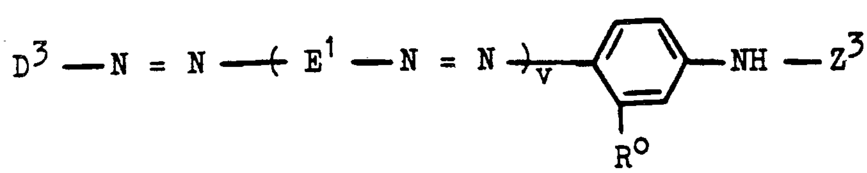

(16d)

$$D^2 - N = N - K^2 \qquad (16e)$$

$$D^1 - N = N - K^3 \qquad . \ (16f)$$

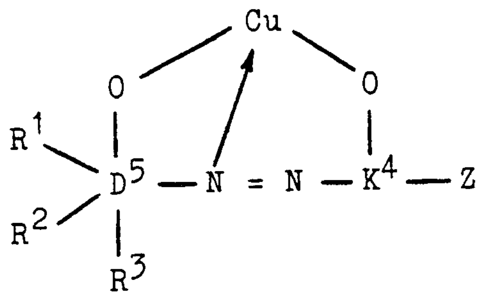

(17)

In diesen Formeln bedeuten:

In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (3), in welcher $R''$ für ein Wasserstoffatom steht, bevorzugt eine faserreaktive Gruppe $Z^1$ oder $Z^2$, enthält, $Z^1$ besitzt die obengenannte Bedeutung oder ist bevorzugt eine Gruppe $Z^2$ und M hat die obengenannte Bedeutung; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono-oder Disulfophenyl- oder Mono-, Di- oder Trisulfonaphthyl-Rest bzw. ein Rest der Formel (12A)

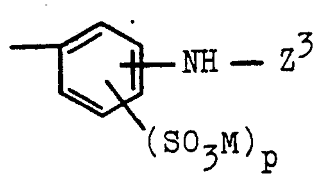

(12A)

in welcher

$Z^3$ ein Rest der oben definierten Formel (3a) oder bevorzugt der Formel (3b) ist und

p und M die obengenannten Bedeutung haben;

in Formel (16a) haben $D^3$, p, $R''$ und $Z^1$ die obengenannten Bedeutungen, wobei $R''$ bevorzugt ein Wasserstoffatom ist und $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist;

in den Formeln (16b), (16c) und (16d) haben $D^3$, M und v die obengenannten Bedeutungen, wobei $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist,

$E^1$ ist ein Rest der Formel (7A)

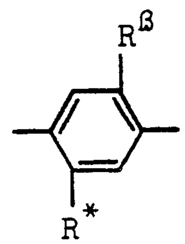

(7A)

in welcher $R^{\beta}$ und $R^{*}$, zueinander gleich oder voneinander verschieden, jedes ein Wasserstoffatom, die Methyl-, Methoxy- oder Ethoxygruppe bedeutet,
$R^{o}$ ist die Acetylamino- oder Ureidogruppe und
$R^{*}$ ist ein Wasserstoffatom oder eine Sulfogruppe;
in Formel (16e) ist $D^2$ ein Rest der obenangegebenen und definierten allgemeinen Formel (12), wobei im Rest $Z^1$ der Rest $R''$ bevorzugt ein Wasserstoffatom ist und $Z^1$ insbesondere bevorzugt ein Rest der allgemeinen Formel (3b) ist, und $K^2$ einen Rest der obengenannten und definierten allgemeinen Formel (8a), (8b), (8d) oder (8e) bedeutet;
in Formel (16f) bedeutet $D^1$ einen Rest der allgemeinen Formel (10a) oder (10b) und $K^3$ einen Rest der allgemeinen Formel (14a) bis (14f);
in Formel (17) bedeutet $D^5$ einen Benzol- oder Naphthalinkern, $R^1$, $R^2$ und $R^3$ haben die obengenannten, insbesondere bevorzugten Bedeutungen, wobei im Falle, daß $D^5$ für einen Naphthalinkern steht, $R^2$ ein Wasserstoffatom und $R^3$ ein Wasserstoffatom oder eine Sulfogruppe bedeutet, die Oxygruppen an $D^5$ und $K^4$ stehen in ortho-Stellung zur Azogruppe, $K^4$ ist ein Naphthalinkern, der durch 1 oder 2 Sulfogruppen substituiert sein kann, bevorzugt substituiert ist, und Z die obengenannte faserreaktive Gruppe der allgemeinen Formel (3a) ist oder bevorzugt eine Gruppe der Formel -NH-$Z^2$ mit $Z^2$ der Bedeutung der allgemeinen Formel (3b) ist.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (3) enthält. So können beispielsweise Mono- und Disazofarbstoffe entsprechend der allgemeinen Formel (1) durch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (3) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (3) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (3) enthält. Solche Diazo- und Kupplungskomponenten sind beispielsweise die anfangs zahlreich beschriebenen Verbindungen, die den allgemeinen Formeln (5), (6), (7), (8), (9), (10), (11) und (14) entsprechen bzw. sich davon ableiten.

Die Diazotierungs- und Kupplungsreaktionen erfolgen in üblicher Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25 °C, ebenso bevorzugt in wäßrigem Medium.

Die neuen Farbstoffe der allgemeinen Formel (1) können ebenfalls erfindungsgemäß in der Weise hergestellt werden, daß man ein Cyanurhalogenid, wie Cyanurfluorid oder Cyanurchlorid, mit einer Aminoverbindung der allgemeinen Formel (18)

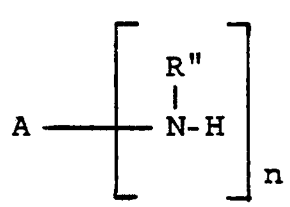

(18)

in welcher A, $R''$ und n die obengenannten Bedeutungen haben, und einer Aminoverbindung der allgemeinen Formel (19) $H_2N$-$Z^*$ (19)
mit $Z^*$ der obengenannten Bedeutung in beliebiger Folge umsetzt. So kann man zunächst eine Aminoverbindung der allgemeinen Formel (18) mit dem Cyanurhalogenid zur Dihalogentriazinylaminoverbindung der allgemeinen Formel (20)

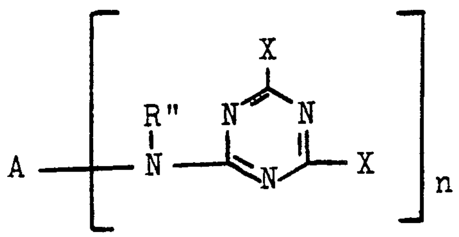

(20)

mit A, X, R″ und n der obengenannten Bedeutung umsetzen, und diese wird durch Reaktion mit einer Aminoverbindung der allgemeinen Formel (19) in äquivalenter Menge in den Endfarbstoff (1) übergeführt, oder man reagiert zunächst eine Aminoverbindung der allgemeinen Formel (19) mit dem Cyanurhalogenid zur Dihalogentriazinylaminoverbindung der allgemeinen Formel (21)

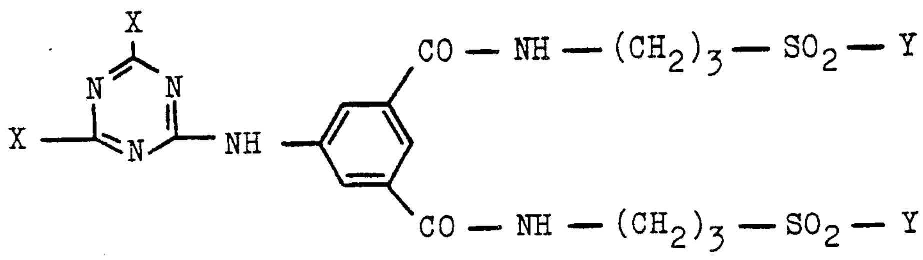

(21)

mit R″, X und Y der obengenannten Bedeutung und setzt diese in äquivalenter Menge mit der Verbindung der allgemeinen Formel (18) zum Endfarbstoff (1) um. Die Kondensationsreaktionen zwischen Cyanurhalogenid bzw. den Dihalogentriazinylaminoverbindungen (20) und (21) mit den Aminoverbindungen (18) und/oder (19) können in der üblichen Weise der Umsetzung eines Cyanurhalogenids bzw. einer Dihalogentriazinylaminoverbindung mit Aminoverbindungen erfolgen, so in organischem oder bevorzugt wäßrig-organischem Medium, insbesondere bevorzugt in wäßrigem Medium unter Zusatz säurebindender Mittel, wie

Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan oder Dimethylformamid.

Die Kondensationsreaktionen zwischen Cyanurfluorid und den Aminoverbindungen erfolgen in der Regel bei einer Temperatur zwischen -10° C und +10° C, vorzugsweise zwischen -5° C und +5° C, sowie bei einem pH-Wert zwischen 1,0 und 7,0, bevorzugt zwischen 4 und 5. Die Umsetzung der Difluortriazinylaminoverbindungen der allgemeinen Formel (20) oder (21) mit einer Aminoverbindung der allgemeinen Formel (18) bzw. (19) erfolgt beispielsweise bei einer Temperatur zwischen 0 und 50° C, bevorzugt zwischen 10 und 30° C, und bei einem pH-Wert zwischen 2 und 8, bevorzugt zwischen 5 und 7, wobei darauf zu achten ist, daß die faserreaktive Gruppierung im schwach alkalischen Bereich nicht geschädigt wird. Die Kondensationsreaktionen mit dem Cyanurhalogenid erfolgen unter gleichen Bedingungen, jedoch bei 10 bis 20° C höheren Temperaturen.

Bei der erfindungsgemäßen Synthese von Schwermetallkomplex-Azofarbstoffen, beispielsweise solchen entsprechend der allgemeinen Formeln (4c) und (17), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel -N(R″)-Acyl , in welcher Acyl für den Acylrest einer organischen Säure, wie einer niederen Alkancarbonsäure, steht und R″ die obengenannte Bedeutung besitzt, so beispielsweise von einer Ausgangsverbindung entsprechend der allgemeinen Formel (22)

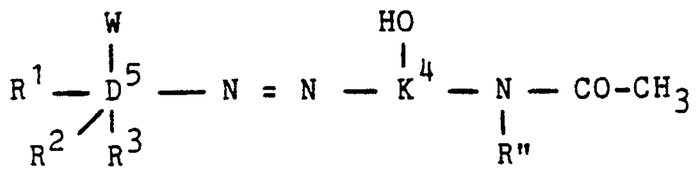

(22)

aus, in welcher $R^1$, $R^2$, $R^3$, $D^5$, $K^4$ und $R''$ die obengenannten Bedeutungen haben und W ein Wasserstoffatom oder eine in ortho-Stellung zur Azogruppe an $D^5$ gebundene Hydroxy- oder Methoxygruppe ist, und setzt diese acylaminogruppenhaltige Ausgangs-Azoverbindung analog bekannten und üblichen Verfahrensweisen mit einem Schwermetall-abgebenden Mittel, wie einem Schwermetallsalz, um oder unterwirft sie im Falle der Bildung eines Kupferkomplex-Azofarbstoffes auch einer auf üblichem Wege durchzuführenden oxidativen oder entalkylierenden Kupferungsreaktion. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit Cyanurfluorid und der faserreaktiven Aminoverbindung entsprechend der allgemeinen Formel (19) zu den erfindungsgemäßen Farbstoffen der allgemeinen Formel (1) umgesetzt werden.

Die erfindungsgemäßen Farbstoffe, die als Gruppen $-SO_2-Y$ ß-Sulfatoethylsulfonyl- oder ß-Phosphatoethylsulfonyl-Gruppen besitzen, können erfindungsgemäß auch so hergestellt werden, daß man einen Farbstoff, der die Gruppe der allgemeinen Formel (1) mit obiger Bedeutung enthält, in welcher jedoch eine oder mehrere der Formelreste Y eine ß-Hydroxyethyl-Gruppe darstellen, analog bekannten Verfahrensweisen mit einem Sulfatisierungsmittel bzw. Phosphatisierungsmittel, wie konzentrierter Schwefelsäure und Schwefeltrioxid enthaltender Schwefelsäure bzw. wäßriger konzentrierter Phosphorsäure und Polyphosphorsäure, umsetzt, wobei die Sulfatisierung in der Regel bei einer Temperatur zwischen 10°C und 25°C und die Phosphatisierung bei einer Temperatur zwischen 20 und 100°C erfolgt.

Die Ausgangsfarbstoffe mit den ß-Hydroxyethylsulfonyl-Gruppen sind analog den obigen Angaben zur Herstellung der erfindungsgemäßen Farbstoffe synthetisierbar, indem man entweder entsprechende Farbstoffvorprodukte einsetzt, die diese ß-Hydroxyethylsulfonyl-Gruppe(n) enthalten, oder einen Amino-Farbstoff der allgemeinen Formel (18) und eine Aminoverbindung der allgemeinen Formel (19), in welcher jedoch Y für die ß-Hydroxyethyl-Gruppe steht, mit einem Cyanurhalogenid gemäß den obigen Reaktionsbedingungen umsetzt.

Erfindungsgemäße Farbstoffe entsprechend der allgemeinen Formel (1), in welchen eine oder mehrere der Formelreste Y eine Vinylgruppe darstellen, können erfindungsgemäß auch aus Farbstoffen entsprechend der allgemeinen Formel (1) erhalten werden, bei denen mindestens eine der Formelreste Y eine ß-Sulfatoethyl- oder ß-Halogenethyl-Gruppe bedeuten, indem man die ß-Sulfatoethyl- oder ß-Halogenethyl-Gruppe durch Behandlung mit einem wäßrigen Alkali, wie beispielsweise Natriumhydrogencarbonat oder Natriumhydroxid, so in wäßrigen Medium bei einer Temperatur von 10 bis 60°C und einem pH-Wert von 9 bis 11, zur Vinylgruppe überführt.

Die Ausgangsverbindungen der allgemeinen Formel (19) sind bisher noch nicht beschrieben. Sie lassen sich herstellen, indem man γ-(ß′-Hydroxyethylsulfonyl)-propylamin in zweifach molarer Menge mit 5-Nitrobenzol-1,3-di-(carbonsäurechlorid) in wäßrigem Medium bei einem pH-Wert zwischen 7 und 9,5 und bei einer Temperatur von 20 bis 60 °C umsetzt und die so erhaltene Nitrobenzol-Verbindung, gemäß üblicher Verfahrensweise der Reduktion einer aromatischen Nitrogruppe zur Aminogruppe, wie beispielsweise durch katalytische Reduktion mittels Wasserstoff an einem metallischen Katalysator, wie beispielsweise Raney-Nickel, in beispielsweise wäßrigem Medium, zur Anilinverbindung (19) mit Y gleich den ß-Hydroxyethyl-Gruppen reduziert.

Die Verbindungen der allgemeinen Formel (19), in welchen die Y für die ß-Hydroxyethyl-Gruppen stehen, können in an und für sich bekannter Verfahrensweise in die faserreaktiven Verbindungen mit Y gleich den entsprechenden faserreaktiven Gruppierungen einer der anfangs angegebenen Bedeutungen übergeführt werden, so beispielsweise in deren Esterderivate mit Y gleich der Sulfato-, Phosphato- oder Acetyloxy-Gruppe durch Umsetzung mit beispielsweise 100%iger Schwefelsäure oder Schwefeltrioxid enthaltender Schwefelsäure bzw. mit konzentrierter Phosphorsäure oder Polyphosphorsäure bzw. mittels Eisessig.

Die erfindungsgemäßen Verbindungen der allgemeinen Formel (1) eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive

Farbstoffe, die eine Kombination aus den faserreaktiven Gruppen der Fluortriazin- und Vinylsulfonreihe besitzen. Insbesondere sind die erfindungsgemäßen Farbstoffe bei 20 bis 40 °C und im Klotz-Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Alkalimethallsalze wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Der Formelrest $Z^x$, der sich in den Formeln der nachstehenden Beispiele findet, bedeutet die 3,5-Di-{carbonsäure-[γ-(β′-sulfatoethylsulfonyl)-propylamid]}-phenyl-Gruppe entsprechend der nachstehend in Form der freien Säure angegebenen allgemeinen Formel (25), und der Rest $Z^v$ bedeutet den 3,5-Di-[carbonsäure-(γ-vinylsulfonyl)-propylamid]-phenyl-Rest entsprechend der nachstehend angegebenen Formel (26):

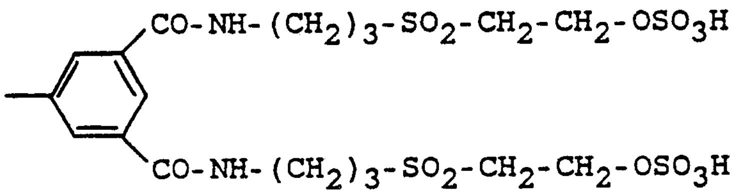

(25)

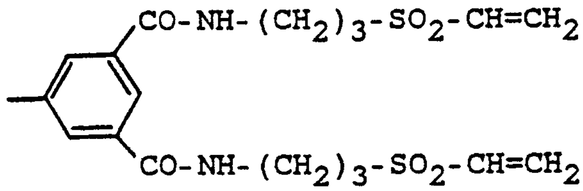

(26).

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel A**

Die Ausgangsverbindung der Formel (19A)

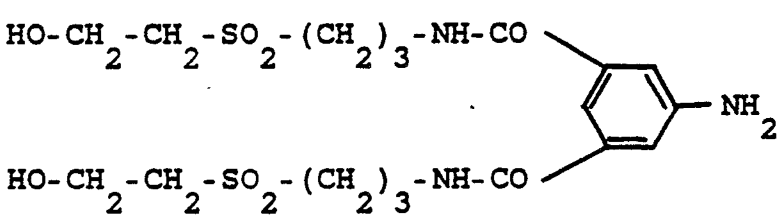

(19A)

wird wie folgt hergestellt:
In 750 Teile 3-Amino-propan-1-ol leitet man bis zur Bildung des Hydrochlorids etwa 365 Teile Chlorwasserstoff ein. In das noch flüssige Hydrochlorid werden bei 70 bis 85 °C langsam 1190 Teile Thionylchlorid gegeben. Das nunmehr schwer rührbare Reaktionsgemisch wird noch eine Stunde gerührt und danach in

600 Teilen Wasser gelöst. Die Lösung gibt man langsam unter Einhaltung eines pH-Wertes von 11 bis 11,5 mittels Natronlauge und einer Temperatur von höchsten 60° C in eine Lösung von 780 Teilen Thioglykol und 400 Teilen Natriumhydroxid in 1500 Teilen Wasser. Man rührt noch einige Zeit bei etwa 50° C nach und destilliert sodann das Wasser unter reduziertem Druck ab, digeriert den Rückstand in 1500 Volumenteilen Methanol, filtriert von Ungelöstem ab und isoliert nach Entfernen des Lösemittels aus dem Rückstand das γ-(β′-Hydroxyethyl-thio)-propylamin durch fraktionierte Destillation bei 132-140° C/3 mbar.

270 Teile dieser Verbindung werden in 243 Teilen einer 3o%igen Salzsäure gelöst. Man gibt 2 Teile Natriumwolframat hinzu und anschließend langsam 395 Teile 35%iges wäßriges Wasserstoffperoxid, wobei die stark exotherme Reaktion unterhalb 98° C gehalten wird.

Nach dem Abkühlen wird der erhaltene Ansatz des Hydrochlorids des γ-(β′-Hydroxyethylsulfonyl)-propylamins mit 200 Teilen Wasser versetzt. Man stellt mit Natronlauge einen pH-Wert von 9 ein und gibt eine Lösung von 236 Teilen 5-Nitrobenzol-1,3-di-(carbonsäurechlorid) mit 240 Volumenteilen Aceton unter Einhaltung eines pH-Wertes von 7 bis 9 mittels Natronlauge und einer Temperatur von etwa 30° C hinzu. Nach Beendigung der Reaktion kühlt man den Ansatz auf 0 bis 5° C ab und isoliert das gebildete 5-Nitrobenzol-1,3-di-{carbonsäure-[γ-(β′-hydroxyethylsulfonyl)-propylamid]} durch Filtration; es besitzt einen Schmelzpunkt von 101-104° C.

Die erhaltene Nitrobenzol-dicarbonsäureamid-Verbindung wird in 1200 Teilen Wasser suspendiert und katalytisch mit Wasserstoff und Raney-Nickel bei 25 bis 60° C und einem Wasserstoffüberdruck von etwa 40 bar zur Aminoverbindung der Formel (19A) reduziert. Nach beendeter Reduktion wird der Katalysator abfiltriert. Die Verbindung (19A) kristallisiert beim Abkühlen des Filtrats auf 0 bis 5° C aus. Es besitzt einen Schmelzpunkt von 145 bis 147° C und ist dünnschichtchromatographisch einheitlich.

**Beispiel B**

Das unter Beispiel A hergestellte 5-Aminobenzol-1,3-bis-[γ-(β′-hydroxyethylsulfonyl)-N-propyl-carbonsäureamid] kann in dessen faserreaktiven Derivate, wie beispielsweise deren Bis-sulfato-, -phosphato- oder -acetyloxy-Verbindung, auf übliche Weise übergeführt werden, so beispielsweise durch Umsetzung in 100%iger Schwefelsäure oder 100%iger Phosphorsäure oder in Eisessig.

Sowohl die β-Hydroxyethylsulfonyl- als auch die β-Sulfato-, β-Phosphato- und β-Acetyloxyethylsulfonyl-Verbindungen dieses 5-Nitro-benzol-1,3-dicarbonsäureamids dienen als Diazokomponente für die Synthese der erfindungsgemäßen Farbstoffe. Wird die β-Hydroxyethylsulfonyl-Verbindung gemäß Formel (19A) als Diazokomponente in die Synthese der erfindungsgemäßen Farbstoffe eingesetzt, so lassen sich analog zu bekannten Verfahrensweisen die β-Hydroxyethylsulfonyl-Gruppen entweder in Zwischenverbindungen während der Synthese des Azofarbstoffes oder im fertiggestellten Azofarbstoff selbst in die entsprechenden β-Sulfato-, β-Phosphato- oder β-Acetyloxy-Derivate überführen.

**Beispiel 1**

Zu 17,3 Teilen einer salzsauer diazotierten Anilin-4-sulfonsäure gibt man bei 5° C 31,6 Teile einer Suspension von 1-Amino-8-naphthol-3,6-disulfonsäure in 300 Teilen Wasser. Man kuppelt während 8 Stunden bei einem pH-Wert zwischen 1 und 2 und fügt anschließend eine Lösung des Diazoniumsalzes aus 92,2 Teilen des sekundären Kondensationsproduktes aus 1,3-Phenylendiamin-4-sulfonsäure, Cyanurfluorid und 3,5-Bis-[γ-(β′-sulfatoethylsulfonyl)-propylaminocarbonyl]-anilin hinzu. Man stellt mit Natriumcarbonat den pH-Wert auf 5 bis 6 und führt die Kupplungsreaktion innerhalb dieses pH-Bereiches und einer Temperatur von etwa 20° C durch. Anschließend wird die erhaltene Syntheselösung unter reduziertem Druck bei 60° C eingedampft.

Es wird ein schwarzes, elektrolythaltiges Pulver des Alkalimetallsalzes der Verbindung der Formel

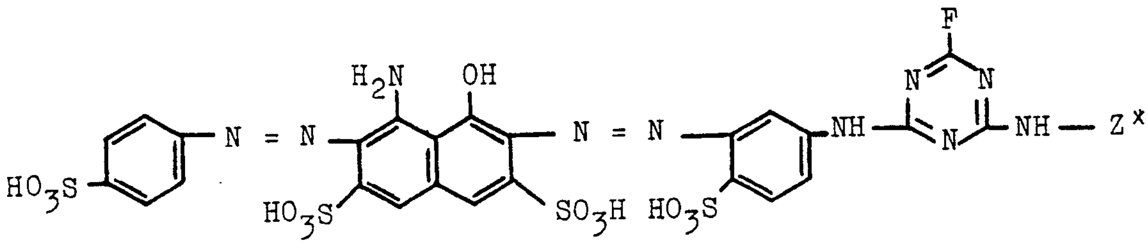

($\lambda_{max}$ = 598 nm)

mit $Z^x$ der obengenannten Bedeutung erhalten, das nach den üblichen Färbeverfahren für faserreaktive Farbstoffe bspw. Baumwolle in echten marineblauen Tönen färbt. Von den Echtheiten können insbesondere die Wasch- und Schweißlichtechtheiten hervorgehoben werden.

**Beispiel 2**

Zur Herstellung einer erfindungsgemäßen Disazoverbindung geht man analog dem Beispiel 1 von einer Monoazoverbindung aus Anilin-4-sulfonsäure als Diazokomponente und 1-Amino- 8-naphthol-3,6-disulfonsäure als Kupplungskomponente aus und fügt zu der salzsauren Lösung dieser Monoazoverbindung die Lösung des Diazoniumsalzes aus 93,9 Teilen des sekundären Kondensationsproduktes aus 1,3-Phenylendiamin-4-sulfonsäure, Cyanurchlorid und 3,5-Bis-[γ-(β′-sulfatoethylsulfonyl)-propylaminocarbonyl]-anilin hinzu. Die Kupplungsreaktion wird sodann bei einem pH-Wert zwischen 5 und 6, wie im Beispiel 1 angegeben, durchgeführt.

Man erhält den erfindungsgemäßen Farbstoff als Natriumsalz; er besitzt, in Form der freien Säuren geschrieben, die Formel

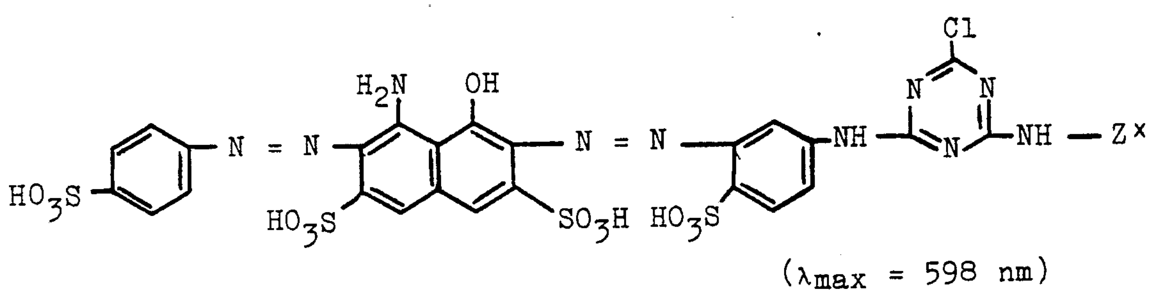

($\lambda_{max}$ = 598 nm)

mit $Z^x$ der obengenannten Bedeutung und zeigt sehr gute Farbstoffeigenschaften. Bei Anwendung von für faserreaktive Farbstoffe üblichen Applikations- und Fixierverfahren liefert er auf den in Beschreibung genannten Materialien, wie insbesondere Cellulosefasermaterialien, wie Baumwolle, marineblaue Färbungen und Drucke mit guten Echtheitseigenschaften.

**Beispiel 3**

Zur Überführung des erfindungsgemäßen Farbstoffes von Beispiel 2 in dessen Vinylsulfonylform löst man ihn in Wasser von 15 bis 20 °C und stellt die Lösung mit Natronlauge auf einen pH-Wert von 10,5 ein. Der pH-Wert fällt nach kurzer Zeit auf etwa 9, was die Abspaltung der Sulfatogruppen anzeigt. Geht der pH-Wert nicht weiter zurück, ist die Abspaltung der Sulfatogruppen vollständig; dies benötigt etwa 15 Minuten. Man stellt die Lösung sodann mit Salzsäure auf einen pH-Wert von 5 und salzt den Farbstoff durch Zugabe von Kaliumchlorid aus.

Der erfindungsgemäße Farbstoff besitzt, in Form der freien Säure geschrieben, die Formel

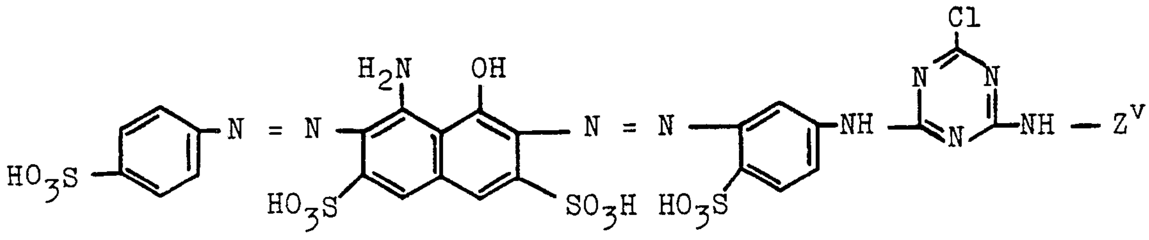

($\lambda_{max}$ = 598 nm)

mit $Z^v$ der obengenannten Bedeutung der erfindungsgemäße Farbstoff besitzt sehr gute Farbstoffeigenschaften und färbt nach dem für faserreaktive Farbstoffe üblichen Applikations- und Fixierverfahren bspw. lose Fasermaterialien in einem schönen marineblauen Farbton mit guten Echtheitseigenschaften, die denen des Farbstoffs des Beispiels 2 entsprechen.

**Beispiele 4 bis 16**

Weitere erfindungsgemäße Farbstoffe entsprechend einer allgemeinen Formel (A)

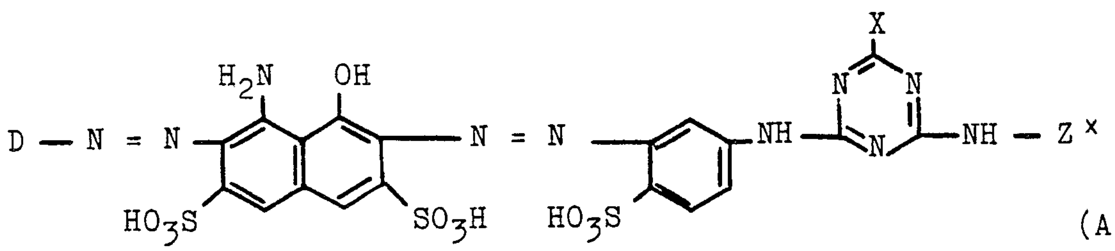

(A)

worin $Z^x$ den Rest der früher angegebenen Formel (25) und X gleich Fluor oder Chlor ist, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 1 unter Anwendung der auf 1-Amino-8-naphthol-3,6-disulfonsäure als bivalenter Kupplungskomponente sauer angekuppelten Diazokomponente $D-NH_2$ , der 1,3-Phenylendiamin-4-sulfonsäure, Cyanurfluorid oder Cyanurchlorid und dem der allgemeinen Formel (19) entsprechenden Amin $H_2N-Z^x$ herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Rest X | Farbton |
|---|---|---|---|
| 4 | 2-Chlor-4-sulfophenyl | Fluor | grünstichig marineblau (615) |
| 5 | dito | Chlor | grünstichig marineblau (615) |
| 6 | 2-Chlor-4,6-disulfophenyl | Fluor | grünstichig marineblau (618) |
| 7 | dito | Chlor | marineblau |
| 8 | 4-Chlor-2-sulfophenyl | Fluor | marineblau |
| 9 | dito | Chlor | marineblau |
| 10 | 1,5-Disulfonaphth-2-yl | Fluor | grünstichig marineblau (610) |
| 11 | dito | Chlor | grünstichig marineblau (612) |
| 12 | 4-(ß-Sulfatoethylsulfonyl)-phenyl | Fluor | marineblau (604) |
| 13 | dito | Chlor | marineblau |
| 14 | 4-(ß-Sulfatoethylsulfonyl)-2-sulfo-phenyl | Fluor | grünstichig marineblau (624) |
| 15 | 5-(ß-Sulfatoethylsulfonyl)-2-sulfo-phenyl | Chlor | grünstichig marineblau (615) |
| 16 | dito | Fluor | grünstichig marineblau (615) |

**Beispiel 17**

18,8 Teile 1,3-Phenylendiamin-4-sulfonsäure werden unter starkem Rühren bei 0 °C mit 14 Teilen Cyanurfluorid umgesetzt. Durch Zugabe einer wäßrigen Natriumcarbonatlösung wird der pH-Wert zwischen 4 und 5 gehalten. Anschließend werden 64 Teile 3,5-Bis-[γ-(β′-sulfatoethylsulfonyl)-propylaminocarbonyl]-anilin bei 20 °C und einem pH-Wert zwischen 5 und 6 ankondensiert. Das erhaltene sekundäre Kondensationsprodukt wird sodann in üblicher Weise nach Zugabe von Salzsäure mit Natriumnitrit bei einer Temperatur zwischen 0 und 5 °C diazotiert. Die erhaltene Diazoniumsalzlösung wird zu einer Suspension von 30,8 Teilen 1-Amino-8-naphthol-3,6-disulfonsäure in 300 Teilen Wasser gegeben. Die Kupplungsreaktion erfolgt einem pH-Wert von 1,5 bis 2.

Die erhaltene Monoazoverbindung wird nunmehr mit einer salzsauren, wäßrigen Lösung der Diazoniumverbindung von 17,3 Teilen Anilin-4-sulfonsäure versetzt; die Kupplungsreaktion zum Disazofarbstoff wird bei einem pH-Wert zwischen 4,5 und 5,5 und einer Temperatur zwischen 0 und 20 °C durchgeführt. Die erfindungsgemäße Verbindung wird durch Eindampfen der Lösung, wie Sprühtrocknung, isoliert. Man erhält ein schwarzes elektrolythaltiges Pulver mit dem Alkalimetallsalz der Verbindung der Formel

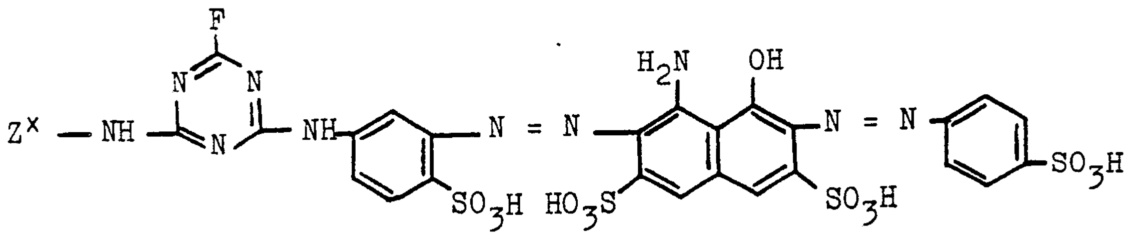

($\lambda_{max}$ = 609 nm)

mit $Z^x$ der obengenannten Bedeutung, die nach den in der Anwendungstechnik für faserreaktive Farbstoffe üblichen Färbe- und Druckverfahren auf Baumwolle rotstichig marineblaue Färbungen mit guter Echtheit liefert. Von den Echtheiten sind die Licht- und Waschechtheiten hervorzuheben.

**Beispiele 18 bis 23**

Weitere erfindungsgemäße Farbstoffe entsprechend einer allgemeinen Formel (B)

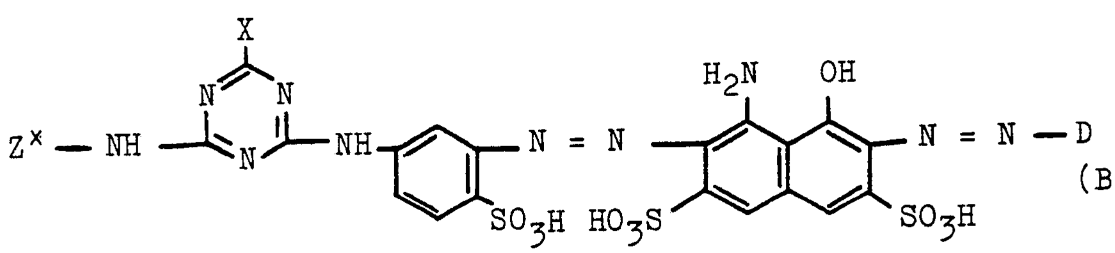

(B)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 17 unter Anwendung der neutral gekuppelten Diazokomponente $D-NH_2$ , 1-Amino-8-naphthol-3,6-disulfonsäure als bivalenter Kupplungskomponente und dem Kondensationsprodukt aus 1,3-Phenylendiamin-4-sulfon säure, Cyanurfluorid oder Cyanurchlorid und dem Amin der Formel $H_2N-Z^x$ mit $Z^x$ der obigen Bedeutung als sauer angekuppelter Diazokomponente, herstellen. Diese neuen Verbindungen entsprechend der allgemeinen

Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Rest X | Farbton |
|---|---|---|---|
| 18 | 1,5-Disulfo-2-naphthyl | Fluor | marineblau (610) |
| 19 | 2-Chlor-4,6-disulfophenyl | Fluor | marineblau |
| 20 | 2-Chlor-4-sulfophenyl | Fluor | marineblau (616) |
| 21 | 2-Methoxy-5-methyl-4-sulfophenyl | Fluor | marineblau |
| 22 | 4-(β-Sulfatoethylsulfonyl)-phenyl | Chlor | marineblau (612) |
| 23 | 3,6,8-Trisulfo-2-naphthyl | Chlor | marineblau |

**Beispiel 24**

Das Kondensationsprodukt aus 18,8 Teilen 1,3-Phenylendiamin-4-sulfonsäure, 18,5 Teilen Cyanurfluorid und 64 Teilen 3,5-Bis-[γ-(β′-sulfatoethylsulfonyl)-propylaminocarbonyl]-anilin wird salzsauer diazotiert, mit 28,5 Teilen 1-(4′-Sulfophenyl)-3-carboxypyrazol-5-on versetzt und bei einem pH-Wert zwischen 5 und 7 gekuppelt. Die erfindungsgemäße Verbindung wird mit Kaliumchlorid aus neutraler Lösung ausgefällt und getrocknet. Das erhaltene Alkalisalz der Verbindung der Formel

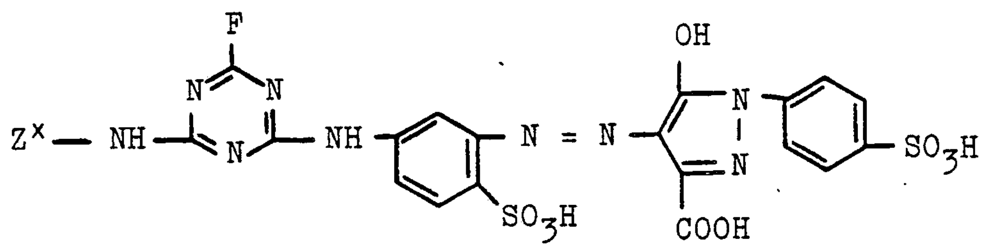

($\lambda_{max}$ = 408 nm)

mit $Z^x$ der obigen Bedeutung färbt nach den für faserreaktive Farbstoffe üblichen Färbeverfahren bspw. Baumwolle in echten gelben Tönen. Von den Echtheiten können die Licht- und Schweißechtheiten hervorgehoben werden.

**Beispiele 25 bis 55**

Weitere erfindungsgemäße Farbstoffe entsprechend einer allgemeinen Formel (C)

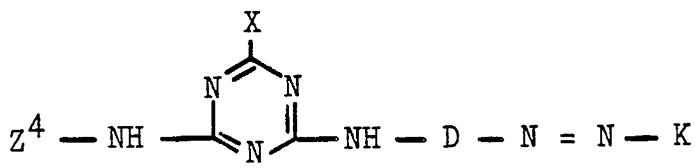

(C)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 24 unter Anwendung des Kondensationsproduktes aus einer Diaminobenzolsulfonsäure entsprechend der Formel $H_2N$-D-$NH_2$ , Cyanurfluorid oder Cyanurchlorid und dem Amin der allgemeinen Formel $Z^4$-$NH_2$ mit $Z^4$ gleich dem Rest $Z^x$ oder $Z^v$ der obigen Bedeutung sowie der Kupplungskomponente H-K herstellen. Diese

neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | $Z^4$ ist ... | Rest X | Farbton |
|---|---|---|---|---|---|
| 25 | 1-Phenyl-3-carboxy-5-pyrazolon | 1,3-Diaminobenzol-4,6-disulfonsäure | $Z^x$ | Fluor | gelb (407) |
| 26 | 1,4-Dimethyl-2-hydroxy-3-sulfo-6-pyridon | dito | $Z^x$ | Chlor | grünstichig gelb |
| 27 | 1-Ethyl-4-methyl-3-carbamoyl-2-hydroxy-6-pyridon | dito | $Z^x$ | Chlor | grünstichig gelb |
| 28 | dito | dito | $Z^v$ | Chlor | grünstichig gelb |
| 29 | 1-(2'-Methyl-4'-sulfophenyl)-3-carboxy-5-pyrazolon | 1,3-Diaminobenzol-4-sulfonsäure | $Z^x$ | Fluor | gelb |
| 30 | 3,6-Disulfo-1-naphthol | dito | $Z^x$ | Fluor | orange |
| 31 | 3,8-Disulfo-1-naphthol | dito | $Z^x$ | Fluor | scharlach |
| 32 | 4,8-Disulfo-1-naphthol | dito | $Z^x$ | Fluor | gelbstichig rot |
| 33 | 3-Sulfo-7-(3'-sulfophenyl)-amino-1-naphthol | dito | $Z^x$ | Chlor | orange |
| 34 | 1-Ethyl-2-hydroxy-4-methyl-5-carbamoyl-6-pyridon | dito | $Z^x$ | Fluor | gelb |
| 35 | 3-Sulfo-7-acetylamino-1-naphthol | dito | $Z^x$ | Chlor | orange |

| Bsp. | Kupplungskomponente H-K | Diaminobenzolsulfonsäure | $Z^4$ ist ... | Rest X | Farbton |
|---|---|---|---|---|---|
| 36 | 1-Naphthol-6-acetylamino-3-sulfonsäure | dito | $Z^x$ | Fluor | orange |
| 37 | 1-(2'-Sulfoethyl)-4-methyl-3-cyano-2-hydroxy-6-pyridon | 1,3-Diaminobenzol-4-sulfonsäure | $Z^x$ | Chlor | gelb |
| 38 | dito | 1,4-Diaminobenzol-2-sulfonsäure | $Z^x$ | Fluor | gelb |
| 39 | 1-Ethyl-4-methyl-3-sulfomethyl-6-hydroxy-2-pyridon | 1,3-Diaminobenzol-4-sulfonsäure | $Z^x$ | Chlor | gelb |
| 40 | 1-(4'-Sulfophenyl)-3-carboxy-5-pyrazolon | dito | $Z^x$ | Fluor | gelb (407) |
| 41 | 1-(4'-Sulfophenyl)-3-methyl-5-pyrazolon | dito | $Z^x$ | Fluor | gelb (392) |
| 42 | dito | 1,4-Diaminobenzol-2-sulfonsäure | $Z^x$ | Fluor | gelb |
| 43 | 1-Acetylamino-3,6-disulfo-8-naphthol | dito | $Z^x$ | Fluor | rot |
| 44 | dito | dito | $Z^v$ | Chlor | rot |
| 45 | dito | dito | $Z^x$ | Chlor | rot |

| Bsp. | Kupplungskomponente H-K | Diaminobenzolsulfonsäure | $Z^4$ ist ... | Rest X | Farbton |
|---|---|---|---|---|---|
| 46 | dito | 1,3-Diaminobenzol-4-sulfonsäure | $Z^X$ | Chlor | rot (520) |
| 47 | 1-Benzoylamino-3,6-disulfo-8-naphthol | dito | $Z^X$ | Chlor | rot (534) |
| 48 | 1-Benzoylamino-4,6-disulfo-8-naphthol | dito | $Z^X$ | Fluor | rot (534) |
| 49 | 4,8-Disulfo-1-naphthol | 1,3-Diaminobenzol-4-sulfonsäure | $Z^X$ | Fluor | rot |
| 50 | 4-Sulfo-naphthol | dito | $Z^X$ | Fluor | rot |
| 51 | 1-Benzoylamino-3,6-disulfo-8-naphthol | 1,4-Diaminobenzol-2-sulfonsäure | $Z^X$ | Chlor | rot |
| 52 | 1-Benzoylamino-4,6-disulfo-8-naphthol | dito | $Z^X$ | Chlor | rot (512) |
| 53 | dito | 1,3-Diamino-2-methyl-benzol-5-sulfonsäure | $Z^X$ | Fluor | rot |
| 54 | dito | dito | $Z^X$ | Chlor | rot |
| 55 | 3-Sulfo-7-(4'-sulfo-phenyl)-amino-1-naphthol | 1,3-Diaminobenzol-4-sulfonsäure | $Z^X$ | Fluor | rot |

**Beispiel 56**

Eine Lösung von 30,3 Teilen 2-Aminonaphthalin-4,8-disulfonsäure in 200 Teilen Wasser wird bei 0 °C mit 6,9 Teilen Natriumnitrit salzsauer diazotiert und mit 15 Teilen 3-Acetylamino-anilin bei einem pH-Wert zwischen 4 und 5 gekuppelt. Die erhaltene Azoverbindung wird mit 19 Teilen Cyanurfluorid bei einer Temperatur von 0 °C und einem pH-Wert von 4 unter starkem Rühren acyliert, das Monokondensationsprodukt mit 70 Teilen 3,5-Bis-[γ-(β′-sulfatoethylsulfonyl)-propylaminocarbonyl]-anilin bei einem pH-Wert von 5 bis 6 und einer Temperatur von 0 bis 20 °C umgesetzt und der erhaltene erfindungsgemäße Farbstoff mit Kaliumchlorid ausgefällt und isoliert. Das Alkalimetallsalz der Verbindung der Formel

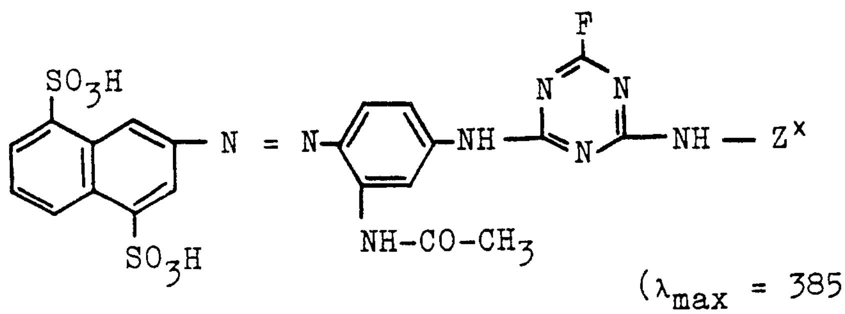

($\lambda_{max}$ = 385 nm)

mit $Z^x$ der obengenannten Bedeutung färbt nach üblichen Färbeverfahren für faserreaktive Farbstoffe Baumwolle in echten rotstichig gelben Tönen. Von den Echtheiten sind insbesondere die Lichtechtheit, die Alkalischweißlichtechtheit und die Chlorwasserechtheit hervorzuheben.

**Beispiele 57 bis 70**

Weitere erfindungsgemäße Farbstoffe entsprechend einer allgemeinen Formel (D)

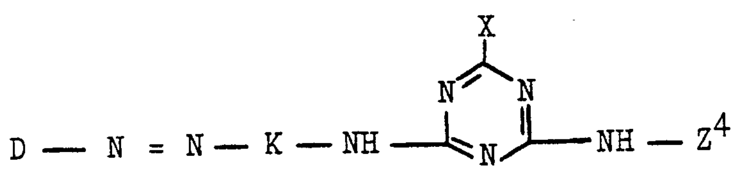

(D)

in welchen $Z^4$ der Rest $Z^x$ oder $Z^y$ obiger Bedeutung, D der Rest der Diazokomponente ohne faserreaktive Gruppe und K der Rest einer aminogruppenhaltigen Kupplungskomponente entsprechend der Formel H-K-$NH_2$ ist, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 56, unter Anwendung der Diazokomponente D-$NH_2$, der Kupplungskomponente H-K-$NH_2$, Cyanurchlorid oder Cyanurfluorid und dem Amin der allgemeinen Formel $H_2N$-$Z^4$ herstellen. Die neuen Verbindungen besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Verbindung $H-K-NH_2$ | $Z^4$ ist ... | Rest X | Farbton |
|---|---|---|---|---|---|
| 57 | 1,5-Disulfo-2-naphthyl | 3-Acetylamino-anilin | $Z^x$ | Fluor | gelb |
| 58 | 1,6-Disulfo-2-naphthyl | 3-Amino-phenylharnstoff | $Z^x$ | Fluor | goldgelb |
| 59 | dito | N-(3-Aminophenyl)-N'-methyl-harnstoff | $Z^x$ | Fluor | goldgelb |
| 60 | 6,8-Disulfo-2-naphthyl | 3-Acetylamino-anilin | $Z^x$ | Chlor | goldgelb |
| 61 | dito | 2-Sulfo-5-acetylamino-anilin | $Z^x$ | Fluor | goldgelb |
| 62 | 3,6,8-Trisulfo-2-naphthyl | 3-Amino-phenylharnstoff | $Z^x$ | Fluor | goldgelb (416) |
| 63 | dito | dito | $Z^x$ | Chlor | goldgelb (408) |
| 64 | dito | dito | $Z^x$ | Chlor | goldgelb |
| 65 | dito | N-Phenyl-N'-(3-amino-phenyl)-harnstoff | $Z^v$ | Chlor | goldgelb |
| 66 | dito | N-(3-Aminophenyl)-N'-methyl-harnstoff | $Z^v$ | Chlor | goldgelb |
| 67 | 4-(ß-Sulfatoethyl-sulfonyl)-phenyl | 3-Acetylamino-anilin | $Z^v$ | Chlor | goldgelb |

| Bsp. | Rest D | Verbindung $H-K-NH_2$ | $Z^4$ ist ... | Rest X | Farbton |
|---|---|---|---|---|---|
| 68 | 3-(ß-Sulfatoethylsulfonyl)-phenyl | dito | $Z^x$ | Fluor | goldgelb |
| 69 | 6-(ß-Sulfatoethylsulfonyl)-8-sulfo-2-naphthyl | dito | $Z^x$ | Fluor | goldgelb |
| 70 | 8-(ß-Sulfatoethylsulfonyl)-6-sulfo-2-naphthyl | dito | $Z^x$ | Chlor | goldgelb |

**Beispiel 71**

95 Teile Cyanurfluorid werden in bekannter Weise erst mit 160 Teilen 1-Amino-3,6-disulfo-8-naphthol und anschließend mit 325 Teilen 3,5-Bis-[γ-(β′-sulfatoethylsulfonyl)-propylaminocarbonyl]-anilin zum Dikondensationsprodukt umgesetzt, das sodann zur Lösung des Diazoniumsalzes von 87 Teilen 1-Aminobenzol-2-sulfonsäure gegeben wird; die Kupplungsreaktion erfolgt bei einem pH-Wert zwischen 4 und 4,5. Der gebildete erfindungsgemäße Farbstoff wird mit Kaliumchlorid ausgefällt. Es wird das Alkalimetallsalz der Verbindung der Formel

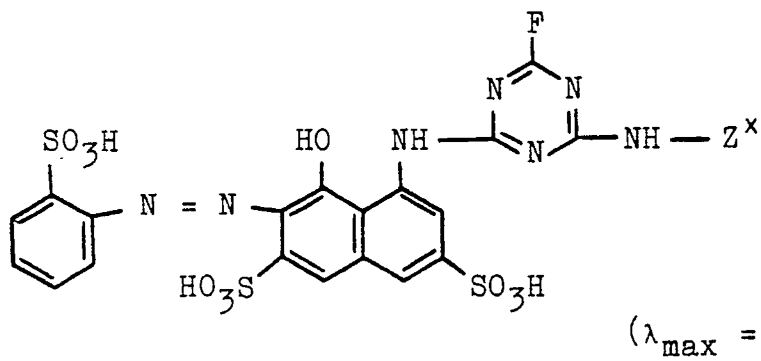

($\lambda_{max}$ = 515 nm)

mit $Z^x$ der obigen Bedeutung erhalten, das Baumwolle in leuchtend roten, echten Tönen färbt. Von den Echtheiten können die Waschechtheiten und die Lichtechtheiten der mit Wasser oder einer Schweißlösung befeuchteten Färbungen hervorgehoben werden.

**Beispiele 72 bis 111**

Weitere erfindungsgemäße Farbstoffe entsprechend einer allgemeinen Formel (E)

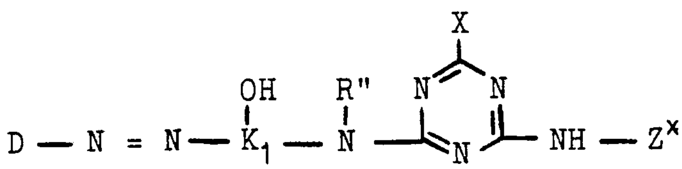

(E)

sind in den nachfolgenden Tabellenbeispielen mit Hilfe der Formelreste von Formel (E) beschrieben. Sie lassen sich in erfindungsgemäßer Weise, beispielsweise analog dem Ausführungsbeispiel 71, unter Anwendung der Diazokomponente $D\text{-}NH_2$ , der Aminonaphthol-sulfonsäure entsprechend einer Formel $H(OH)K_1\text{-}NHR''$ als naphtholischer Kupplungskomponente sowie Cyanurfluorid oder Cyanurchlorid und dem Amin der Formel $H_2N\text{-}Z^x$ mit $Z^x$ dem Rest der früher angegebenen Formel (25) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Kupplungskomponente $H(OH)K_1-NHR''$ | Rest X | Farbton |
|---|---|---|---|---|
| 72 | 4-Sulfo-1-naphthyl | 1-Amino-3,6-disulfo-8-naphthol | Fluor | rot |
| 73 | 6-Sulfo-1-naphthyl | dito | Fluor | rot |
| 74 | 1-Sulfo-2-naphthyl | dito | Chlor | rot |
| 75 | 5-Sulfo-2-naphthyl | dito | Fluor | rot |
| 76 | 6-Sulfo-2-naphthyl | dito | Chlor | rot |
| 77 | 4-Methoxy-2-sulfo-phenyl | dito | Chlor | blaustichig rot |
| 78 | 4-Phenoxy-2-sulfo phenyl | dito | Chlor | dito |
| 79 | 4-Methyl-2-sulfo-phenyl | dito | Fluor | rot |
| 80 | 4-Sulfo-phenyl | dito | Fluor | rot (519) |
| 81 | 3-Sulfo-phenyl | dito | Chlor | rot |
| 82 | 1,5-Disulfo-2-naphthyl | dito | Fluor | rot (520) |
| 83 | 4,8-Disulfo-2-naphthyl | dito | Chlor | rot |
| 84 | 2-Sulfo-phenyl | 1-Amino-4,6-disulfo-8-naphthol | Chlor | rot |
| 85 | dito | 1-Amino-4-sulfo-8-naphthol | Fluor | rotorange |

| Bsp. | Rest D | Kupplungskomponente $H(OH)K_1-NHR''$ | Rest X | Farbton |
|---|---|---|---|---|
| 86 | 4,6-Disulfo-phenyl | 2-Amino-6-sulfo-8-naphthol | Fluor | rotorange |
| 87 | 4-Sulfo-phenyl | 2-Amino-7-sulfo-5-naphthol | Chlor | orange |
| 88 | 1,5-Disulfo-2-naphthyl | 2-Amino-7-sulfo-5-naphthol | Chlor | orange |
| 89 | dito | 2-Methylamino-7-sulfo-5-naphthol | Fluor | orange |
| 90 | dito | dito | Fluor | orange |
| 91 | 4-Methoxy-2-sulfo-phenyl | 3-Amino-7-sulfo-5-naphthol | Chlor | scharlach |
| 92 | 6,8-Disulfo-2-naphthyl | dito | Chlor | scharlach |
| 93 | 4-Methoxy-3-sulfo-phenyl | 2-Amino-7-sulfo-5-naphthol | Chlor | scharlach (499) |
| 94 | dito | 3-Amino-7-sulfo-5-naphthol | Fluor | scharlach |
| 95 | 4-(ß-Sulfatoethyl-sulfonyl)-anilin | 1-Amino-3,6-disulfo-8-naphthol | Fluor | scharlach (490) |
| 96 | 3-(ß-Sulfatoethyl-sulfonyl)-anilin | dito | Fluor | rot |
| 97 | 2-Sulfo-5-(ß-sulfato-ethylsulfonyl)-anilin | dito | Chlor | rot |
| 98 | 4-(ß-Sulfatoethyl-sulfonyl)-anilin | 1-Amino-4,6-disulfo-8-naphthol | Fluor | rot |

| Bsp. | Rest D | Kupplungskomponente $H(OH)K_1$-NHR" | Rest X | Farbton |
|---|---|---|---|---|
| 99 | dito | 3-Amino-7-sulfo-5-naphthol | Fluor | rotorange |
| 100 | 6-Sulfo-8-(ß-sulfatoethylsulfonyl)-2-naphthyl | 2-Amino-7-sulfo-5-naphthol | Fluor | rotorange |
| 101 | 4-Carboxy-phenyl | 1-Amino-3,6-disulfo-8-naphthol | Fluor | rot (498) |
| 102 | 2,4-Disulfo-phenyl | dito | Fluor | rotorange |
| 103 | 2,5-Disulfo-phenyl | dito | Chlor | rotorange |
| 104 | 2-Sulfo-phenyl | 2-Amino-7-sulfo-5-naphthol | Fluor | rotorange |
| 105 | 3,6,8-Trisulfo-2-naphthyl | dito | Fluor | rotorange |
| 106 | dito | dito | Chlor | rotorange |
| 107 | 4-(ß-Sulfatoethylsulfonyl)-phenyl | 1-(ß-Aminoethyl)-4-methyl-3-carbamoyl-2-hydroxy-pyrid-6-on | Chlor | gelb |
| 108 | dito | 1-(ß-Aminoethyl)-4-methyl-3-cyano-2-hydroxy-pyrid-6-on | Fluor | gelb |
| 109 | 1-Sulfo-6-carboxy-2-naphthyl | 1-Amino-3,6-disulfo-8-naphthol | Fluor | blaustichig rot (545) |
| 110 | 2-Sulfo-phenyl | 2-Amino-7-sulfo-5-naphthol | Chlor | rotorange |
| 111 | 1,5-Disulfo-2-naphthyl | dito | Fluor | scharlach |

**Beispiel 112**

Bei 0° C und einem pH-Wert von 4 bis 5 werden 47 Teile der bekannten Aminodisazoverbindung der Formel

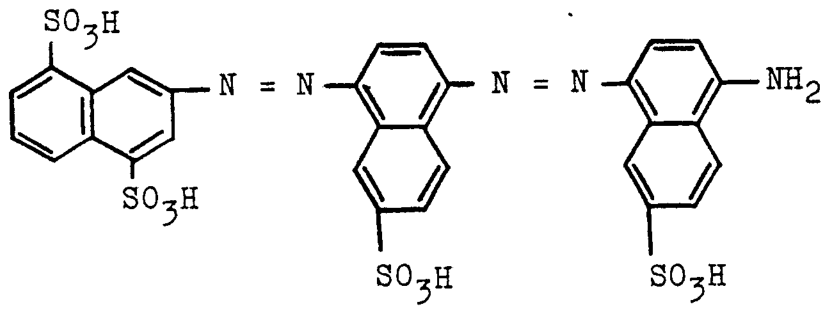

in 300 Teilen Wasser mit 8 Teilen Cyanurfluorid umgesetzt. Das entstandene Produkt wird anschließend mit 38 Teilen 3,5-Bis-[γ-(β′-sulfatoethylsulfonyl)-propylaminocarbonyl]-anilin bei einer Temperatur von 20° C und einem pH-Wert zwischen 5 und 6 umgesetzt. Nach vier Stunden ist die Reaktion beendet. Der erfindungsgemäße Farbstoff wird aus der Syntheselösung durch Eindampfen oder Sprühtrocknung isoliert. Man erhält das elektrolythaltige Farbstoffpulver des Alkalimetallsalzes der Disazoverbindung

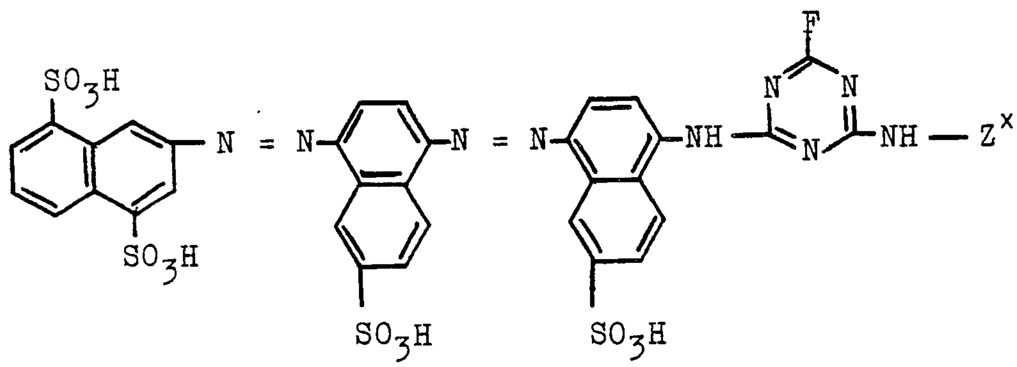

($\lambda_{max}$ = 470 nm)

mit $Z^x$ der obigen Bedeutung, die Baumwolle in echten rötlich-braunen Tönen färbt.

**Beispiele 113 bis 117**

In den nachfolgenden Tabellenbeispielen sind weitere erfindungsgemäße Farbstoffe entsprechend einer allgemeinen Formel (F)

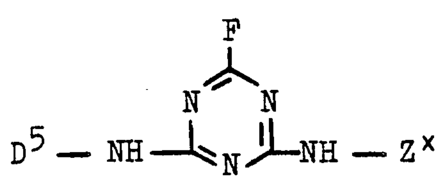

(F)

mit Hilfe dieser Komponenten beschrieben, wobei $Z^x$ für den faserreaktiven Rest der früher angegebenen allgemeinen Formel (25) steht. Diese erfindungsgemäßen Farbstoffe können in erfindungsgemäßer Weise, beispielsweise analog dem Ausführungsbeispiel 112, durch Umsetzung des in dem jeweiligen Tabellenbeispiel aus dem formelmäßig angegebenen Rest $D^5$ ersichtlichen Ausgangs-Aminodisazo-Farbstoffes entspre-

chend der allgemeinen Formel $D^5$-$NH_2$ mit Cyanurfluorid und 3,5-Bis-[γ-(β′-sulfatoethylsulfonyl)-propylaminocarbonyl]-anilin hergestellt werden können. Sie besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest $D^5$- | Farbton |
|---|---|---|
| 113 | 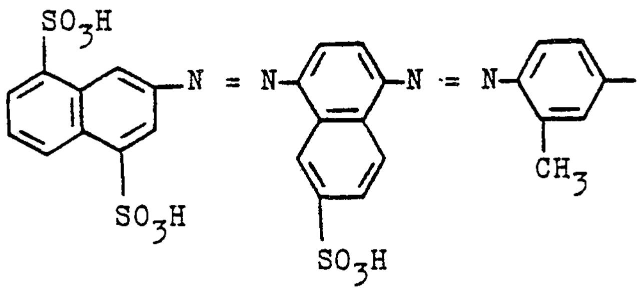 | braun |
| 114 | 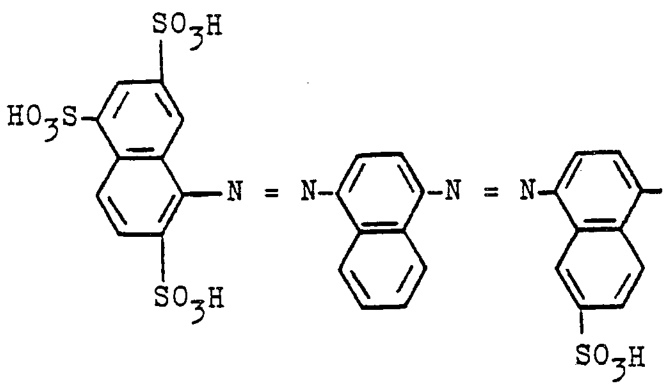 | rotbraun |
| 115 | 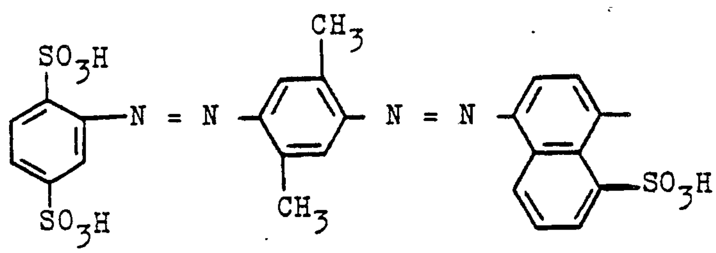 | orangebraun (453) |
| 116 | 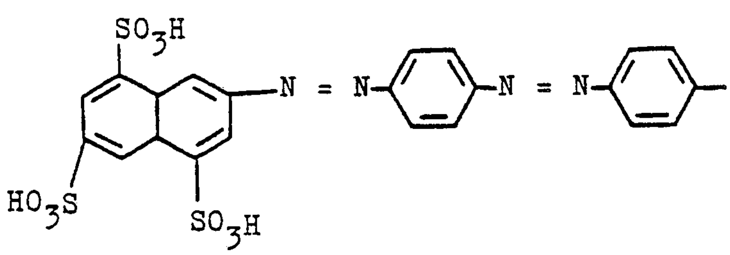 | orangebraun |
| 117 | 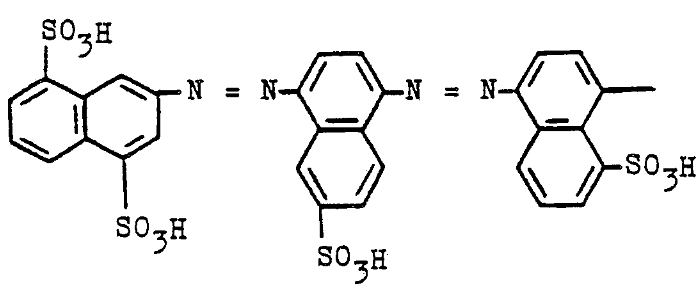 | rotbraun |

**Beispiel 118**

Zu einer Lösung des Natriumsalzes von 18,9 Teilen 2-Aminophenol-4-sulfonsäure in 70 Teilen Wasser und 90 Teilen Eis gibt man 7,4 Teile 96%ige Schwefelsäure und diazotiert mit 14 Teilen einer wäßrigen 40%igen Natriumnitritlösung bei 0 bis 10 °C unter einstündigem Rühren. Überschüssiges Nitrit wird mittels Amidosulfonsäure zerstört. Es wird eine Lösung von 27,5 Teilen des Natriumsalzes von 1-Naphthol-7-amino-3-sulfonsäure in 200 Teilen Wasser hinzugegeben und die Kupplungsreaktion bei einem pH-Wert zwischen 4,5 und 5 gehalten. Anschließend werden 25 Teile Kupfer(II)-sulfat-pentahydrat zugesetzt, und es wird noch 1 Stunde bei einem pH-Wert zwischen 5 und 6 und bei etwa 20 °C weitergerührt. Der Reaktionsansatz wird mit etwas Kieselgur versetzt und filtriert und das Filtrat unter gutem Rühren bei 0 °C langsam mit 13,6 Teilen 2,4,6-Trifluor-1,3,5-triazin (Cyanurfluorid) versetzt, wobei man mittels einer wäßrigen 2n-Natriumcarbonat-Lösung den pH-Wert zwischen 4 und 4,5 hält. Anschließend wird dem Reaktionsansatz bei etwa 20 °C und unter Einhaltung eines pH-Wertes zwischen 5 und 6 eine Lösung von 65 Teilen 3,5-Bis-[γ-(β′-sulfatoethylsulfonyl)-propylaminocarbonyl]-anilin hinzugegeben. Man rührt den Ansatz noch 4 Stunden bei etwa 20 °C weiter, filtriert ihn sodann nach Zugabe von etwas Kieselgur und Einstellung eines pH-Wertes von 5 und isoliert die erfindungsgemäße Verbindung durch Eindampfen oder Sprühtrocknung des Filtrats.

Man erhält das Alkalimetallsalz des Kupferkomplex-Monoazofarbstoffes der Formel

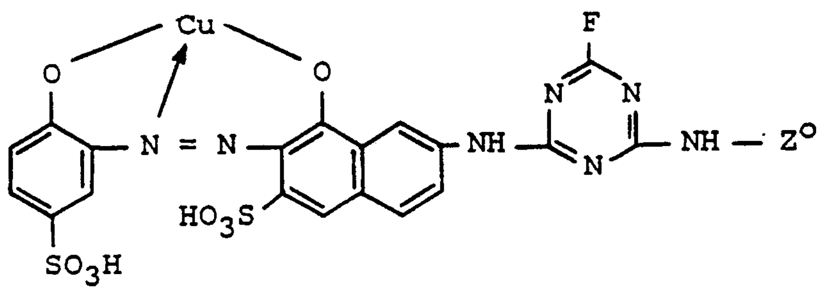

($\lambda_{max}$ = 525 nm)

mit $Z^x$ der oben angegebenen Bedeutung als elektrolytsalzhaltiges Pulver. Der erfindungsgemäße Farbstoff liefert nach den in der Technik für faserreaktive Farbstoffe üblichen Applikations- und Fixiermethoden, wie beispielsweise nach bekannten Auszieh- und Klotzverfahren auf Wolle oder synthetischen Polyamidfasern und insbesondere auf Cellulosefasern rotviolette Färbungen von hoher Farbstärke, gutem Farbaufbau und guten Echtheiten, von denen insbesondere die guten Waschechtheiten, die gute Lichtechtheit und die guten Schweißechtheiten hervorzuheben sind.

**Beispiele 119 bis 132**

In den nachfolgenden Tabellenbeispielen sind weitere erfindungsgemäße Farbstoffe entsprechend einer allgemeinen Formel (G)

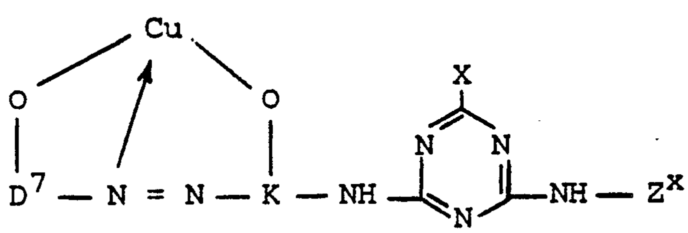

(G)

mit $Z^x$ der oben angegebenen Bedeutung mittels ihrer Komponenten beschrieben. Sie lassen sich in erfindungsgemäßer Weise, beispielsweise analog den Angaben des Ausführungsbeispieles 119, durch Umsetzung der aus der Formel ersichtlichen Komponenten, wie der phenolischen oder naphtholischen Diazokomponente entsprechend der allgemeinen Formel HO-D7-$NH_2$ der aminogruppenhaltigen Kupplungskomponente H-K(OH)-$NH_2$ , Cyanurfluorid oder Cyanurchlorid und 3,5-Bis-[γ-(β′-sulfatoethylsulfonyl)-propylaminocarbonyl]-anilin herstellen und liefern auf den in der Beschreibung genannten Materialien, insbesondere auf Cellulosefasermaterialien, nach den üblichen Färbeverfahren für faserreaktive Farbstoffe kräftige und echte Färbungen in dem in dem jeweiligen Tabellenbeispiel angegebenen Farbton.

| Bsp. | Diazokomponente $HO-D^7-NH_2$ | Kupplungskomponente $H-K(OH)-NH_2$ | Rest X | Farbton |
|---|---|---|---|---|
| 119 | 4-(ß-Sulfatoethylsulfonyl)-2-aminophenol | 3-Sulfo-6-amino-1-naphthol | Fluor | violett |
| 120 | 5-(ß-Sulfatoethylsulfonyl)-4-methoxy-2-aminophenol | 3,6-Disulfo-1-amino-8-naphthol | Fluor | blau |
| 121 | 5-(ß-Sulfatoethylsulfonyl)-2-amino-phenol | 4,6-Disulfo-1-amino-8-naphthol | Fluor | violett |
| 122 | 5-Sulfo-2-aminophenol | dito | Chlor | violett |
| 123 | 4-(ß-Sulfatoethylsulfonyl)-2-aminophenol | 3-Sulfo-7-amino-1-naphthol | Fluor | violett |
| 124 | 5-Sulfo-4-methoxy-2-aminophenol | 3,6-Disulfo-1-amino-8-naphthol | Fluor | blau |
| 125 | 8-(ß-Sulfatoethylsulfonyl)-6-sulfo-2-amino-1-naphthol | dito | Chlor | blau |
| 126 | 6,8-Disulfo-2-amino-1-naphthol | dito | Chlor | blau |
| 127 | 4-Sulfo-2-aminophenol | 3-Sulfo-6-amino-1-naphthol | Fluor | violett |
| 128 | dito | 3,6-Disulfo-1-amino-8-naphthol | Fluor | violett |
| 129 | dito | 1-(2'-Sulfo-4'-aminophenyl)-3-methyl-5-pyrazolon | Fluor | rotstichig braun |
| 130 | dito | 1-(2'-Sulfo-4'-aminophenyl)-3-carboxy-5-pyrazolon | Fluor | dito |
| 131 | 4,6-Disulfo-2-aminophenol | dito | Chlor | dito |
| 132 | 5-Sulfo-2-aminophenol | 3,6-Disulfo-1-amino-8-naphthol | Fluor | violett |

**Ansprüche**

1. Eine Verbindung, die der allgemeinen Formel (1)

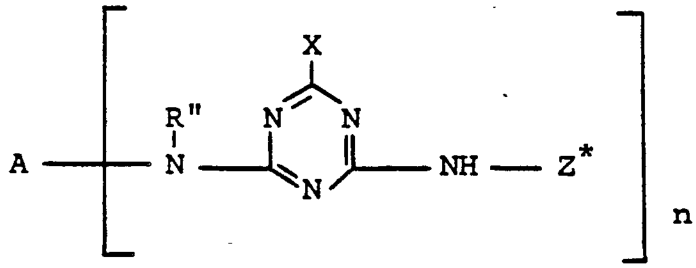

(1)

entspricht, in welcher bedeuten:
A ist der Rest eines sulfogruppenhaltigen Farbstoffes;
n ist die Zahl 1 oder 2, bevorzugt 1;
R″ ist ein Wasserstoffatom oder eine Alkylgruppe von 1 bis 4 C-Atomen;
X ist ein Chlor- oder Fluoratom;
Z* ist eine Gruppe der allgemeinen Formel (2)

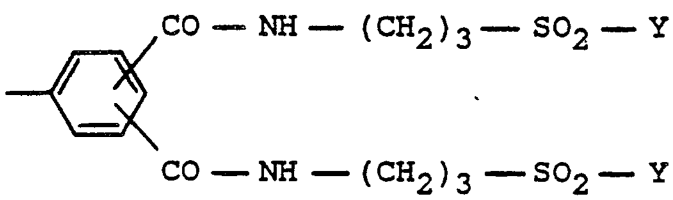

(2)

in welcher
Y die Vinylgruppe oder die ß-Chlorethyl-, ß-Phosphatoethyl- oder ß-Acetyloxyethyl-Gruppe oder bevorzugt die ß-Sulfatoethylgruppe ist.

2. Verbindung nach Anspruch 1, dadurch gekennzeichnet, daß A der Rest eines sulfogruppenhaltigen Mono- oder Disazofarbstoffes ist.

3. Verbindung nach Anspruch 1 oder 2, dadurch gekennzeichnet, daß R″ Wasserstoff und ,Y ß-Sulfatoethyl ist.

4. Verbindung nach Anspruch 1 entsprechend der allgemeinen Formel (4a)

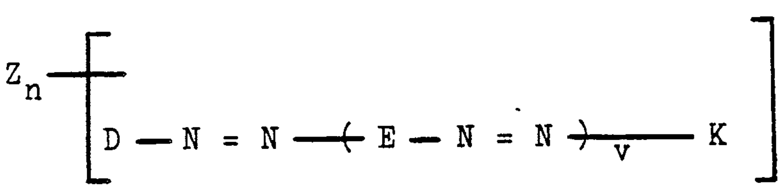

(4a)

in welcher D für den Rest einer Diazokomponente steht, E den bivalenten Rest einer kupplungsfähigen und diazotierbaren Verbindung und K den Rest einer Kupplungskomponente bedeuten, v die Zahl Null oder 1 ist, n die Zahl 1 oder 2 ist und Z einen Rest der allgemeinen Formel (3)

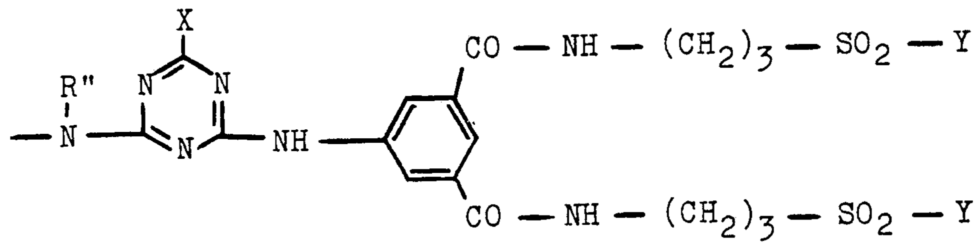

(3)

bedeutet, in welcher X, R″ und Y die in Anspruch 1 oder 3 genannten Bedeutungen haben, wobei der Rest Z an den Rest D oder den Rest K oder im Falle von n = 2 jeweils an D und K bzw. an beide D gebunden ist.

5. Verbindung nach Anspruch 1 entsprechend der allgemeinen Formel (4b)

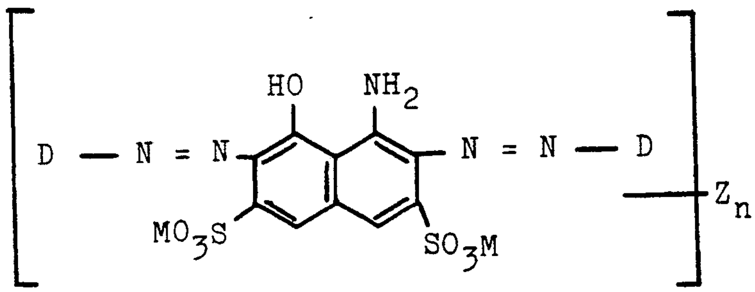

(4b)

in welcher
M ein Wasserstoffatom oder ein Alkalimetall ist,
D jeweils für den Rest einer Diazokomponente steht, die zueinander gleiche oder voneinander verschiedene Bedeutungen besitzen können,
Z einen in Anspruch 4 genannten und definierten Rest der allgemeinen Formel (3) bedeutet,
n die Zahl 1 oder 2 ist und
der Rest Z an dem Rest D oder im Falle n = 2 an beiden D gebunden ist.

6. Verbindung nach Anspruch 1 entsprechend der allgemeinen Formel (4c)

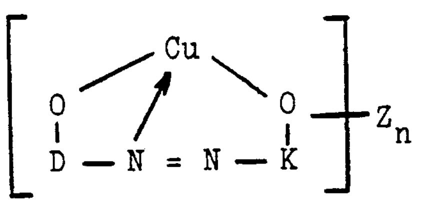

(4c)

in welcher D für den Rest einer Diazokomponente steht, K den Rest einer Kupplungskomponente bedeutet, Z einen in Anspruch 4 genannten und definierten Rest der allgemeinen Formel (3) bedeutet, n die Zahl 1 oder 2, bevorzugt 1, ist und der Rest Z an den Rest D oder den Rest K oder im Falle von n = 2 jeweils an D und K gebunden ist.

7. Verbindung nach Anspruch 4, dadurch gekennzeichnet, daß n für die Zahl 1 steht und Z an K gebunden ist und D einen Rest der allgemeinen Formel

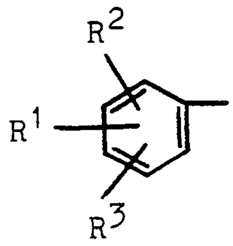

oder

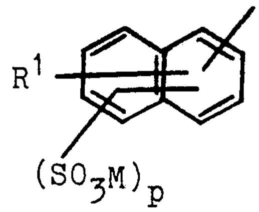

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet.

8. Verbindung nach Anspruch 6, dadurch gekennzeichnet, daß n für die Zahl 1 steht und Z an K gebunden ist und D einen Rest der allgemeinen Formel

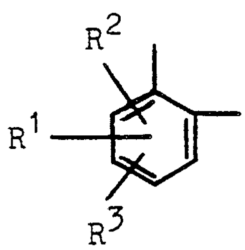

oder

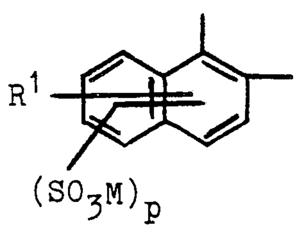

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet.

9. Verbindung nach Anspruch 4, dadurch gekennzeichnet, daß n für die Zahl 1 steht und Z an D gebunden ist und D einen Phenylenrest der allgemeinen Formel

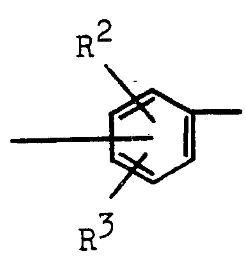

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist.

10. Verbindung nach Anspruch 4 oder 9, dadurch gekennzeichnet, daß n für die Zahl 1 steht, Z an D gebunden ist und K einen Rest der allgemeinen Formel

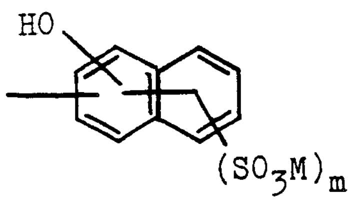

oder

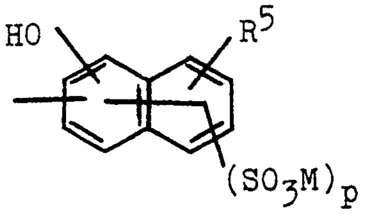

oder

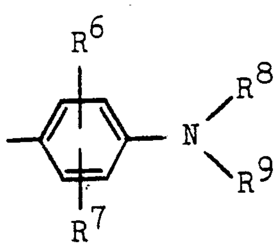

oder

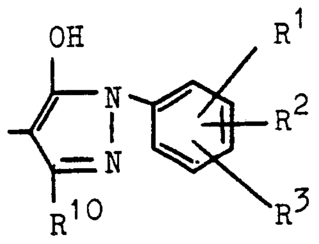

oder

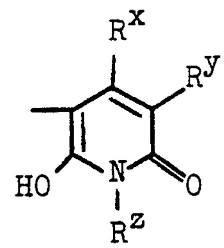

bedeutet, in welchen

$R^1$, $R^2$, $R^3$, p und M die in Anspruch 7 genannten Bedeutungen haben,

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist;

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, Cyano, Carboxy, Carbalkoxy von 2 bis 5 C-Atomen, Carbonamido oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo, Sulfoalkyl mit einem Alkylrest von 1 bis 4C-Atomen, Cyano oder Carbamoyl ist,

$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann,

m für die Zahl Null, 1, 2 oder 3 steht,

p die Zahl Null, 1 oder 2 bedeutet und

M ein Wasserstoffatom oder ein Alkalimetall ist.

11. Verbindung nach Anspruch 4 oder 7, dadurch gekennzeichnet, daß n für die Zahl 1 steht, der Rest Z an K gebunden ist und die Gruppe -K-Z einen Rest der Formel

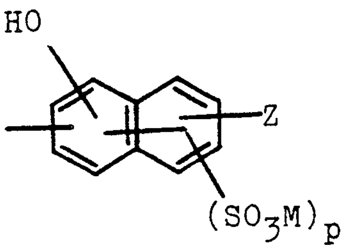

oder

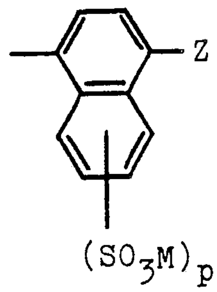

oder

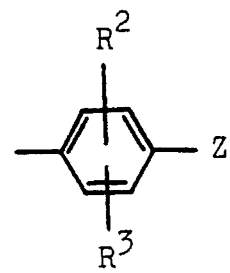

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z die in Anspruch 4 genannte Bedeutung besitzt.

12. Verbindung nach mindestens einem der Ansprüche 4, 6, 7 und 9 bis 11, dadurch gekennzeichnet, daß v für die Zahl 1 steht und E einen Rest der Formel

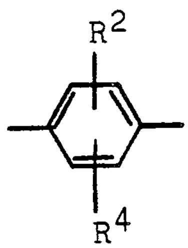

oder

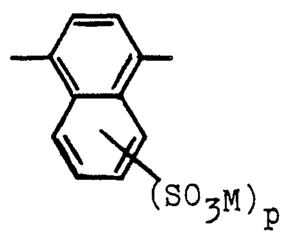

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

13. Verbindung nach Anspruch 5 entsprechend der allgemeinen Formel

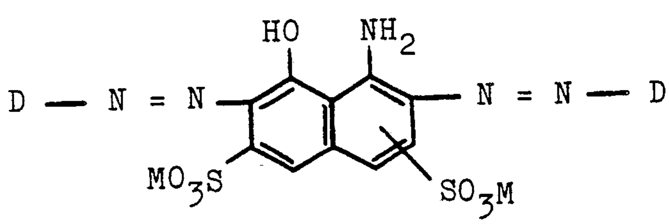

in welcher beide D zueinander gleiche oder voneinander verschiedene Bedeutungen haben und jedes den Rest einer allgemeinen Formel

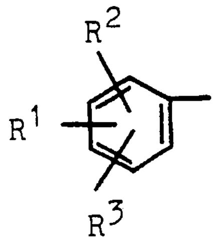

oder

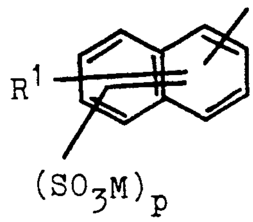

oder

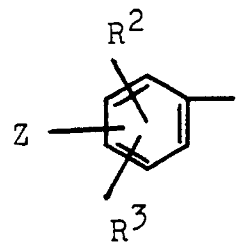

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet, wobei mindestens ein D ein Rest mit der in Anspruch 4 genannten und definierten faserreaktiven Gruppe 2 ist.

14. Verbindung nach Anspruch 1 oder 3 der allgemeinen Formel (16a)

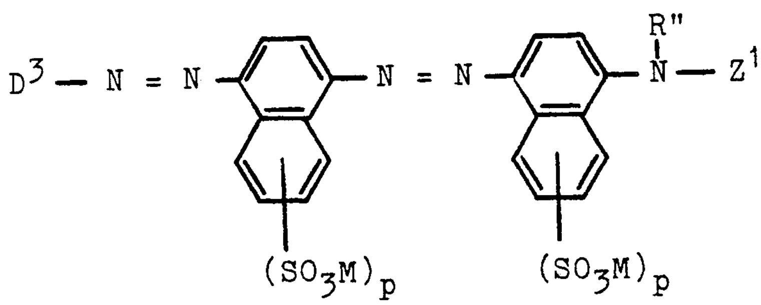

(16a)

in welcher
$D^3$ ein Rest der allgemeinen Formel

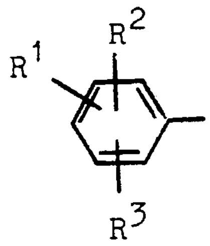

oder

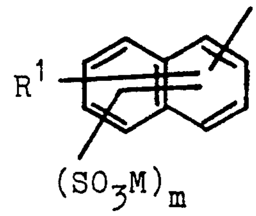

ist, in welchen
$R^1$ ein Wasserstoffatom, eine Sulfogruppe oder eine Gruppe der allgemeinen Formel $-SO_2-Y$ mit Y der in Anspruch 1 oder 3 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
m die Zahl Null, 1, 2 oder 3 bedeutet und
M ein Wasserstoffatom oder ein Alkalimetall ist,
$R''$ die in Anspruch 1 oder 3 genannte Bedeutung besitzt,
p für die Zahl Null, 1 oder 2 steht und
$Z^1$ einen Rest der allgemeinen Formel (3a)

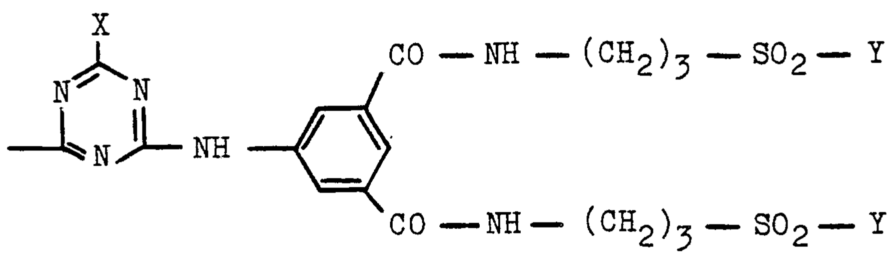

(3a)

mit X und Y der in Anspruch 1 oder 3 angegebenen Bedeutung darstellt.

15. Verbindung nach mindestens einem der Ansprüche 1 bis 12, dadurch gekennzeichnet, daß Y für die ß-Sulfatoethyl-Gruppe steht.

16. Verfahren zur Herstellung der in Anspruch 1 genannten und definierten Verbindungen der allgemeinen Formel (1), dadurch gekennzeichnet, daß man die für wasserlösliche Farbstoffe üblichen Vorprodukte, von denen mindestens eines eine Gruppe der allgemeinen Formel (3) enthält, miteinander in üblicher Verfahrensweise zum entsprechenden Farbstoff umsetzt,
oder indem man Cyanurfluorid oder Cyanurchlorid in beliebiger Folge mit einer Aminoverbindung der allgemeinen Formel (18)

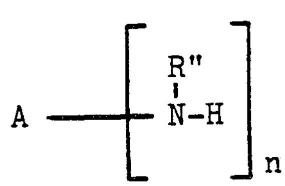

(18)

in welcher A, $R''$ und n die in Anspruch 1 genannten Bedeutungen haben, und einer Aminoverbindung der allgemeinen Formel (19)
$H_2N-Z^*$ (19)
in welcher $Z^*$ die in Anspruch 1 genannten Bedeutungen haben, analog bekannten Verfahrensweisen solcher Kondensationsreaktionen von Cyanurhalogeniden mit Aminoverbindungen umsetzt.

17. Verwendung einer Verbindung entsprechend der Formel (1) von mindestens einem der Ansprüche 1 bis 16 zum Färben und Bedrucken von hydroxy- und/oder carbonamidgruppenhaltigem Material, insbesondere Fasermaterial.

18. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung entsprechend der allgemeinen Formel (1) von mindestens einem der Ansprüche 1 bis 16 verwendet.

Europäisches Patentamt

# EUROPÄISCHER RECHERCHENBERICHT

Nummer der Anmeldung

EP 90 10 3874

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 284 568 (CIBA-GEIGY)<br>* Ansprüche 1,2,17 *<br>--- | 1 | C 09 B 62/04<br>C 09 B 62/503<br>D 06 P 1/38 |
| A | EP-A-0 260 227 (CIBA-GEIGY)<br>* Seite 9, Zeile 50 *<br>----- | 1 | |
| | | | **RECHERCHIERTE SACHGEBIETE (Int. Cl.5)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 30-05-1990 | GINESTET M.E.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)